# EUROPEAN PATENT SPECIFICATION

(11) **EP 3 633 901 B1**
(45) Date of publication and mention of the grant of the patent: **15.02.2023**
(21) Application number: 18809784.4
(22) Date of filing: 24.04.2018
(51) Int. Cl.: H04L 5/00

(54) **METHOD AND DEVICE FOR APPLYING REFERENCE SIGNAL CONFIGURATION INFORMATION, AND STORAGE MEDIUM**
VERFAHREN UND VORRICHTUNG ZUM AUFBRINGEN VON REFERENZSIGNALKONFIGURATIONSINFORMATIONEN UND SPEICHERMEDIUM
PROCÉDÉ ET DISPOSITIF D'APPLICATION D'INFORMATIONS DE SIGNAL DE RÉFÉRENCE, ET SUPPORT DE STOCKAGE

(30) Priority: 27.05.2017 CN 201710393538
(43) Date of publication of application: 08.04.2020
(73) Proprietor: ZTE Corporation, Shenzhen, Guangdong 518057 (CN)
(72) Inventor: YANG, Ling, Shenzhen Guangdong 518057 (CN); ZHAO, Yajun, Shenzhen Guangdong 518057 (CN); LI, Xincai, Shenzhen Guangdong 518057 (CN); XU, Hanqing, Shenzhen Guangdong 518057 (CN)
(74) Representative: Tiburzi, Andrea
(86) International application number: PCT/CN2018/084286
(87) International publication number: WO 2018/219074

(56) References cited:
- CN-A- 106 162 687
- CN-A- 106 374 981
- CN-A- 106 488 472
- CN-A- 106 664 633
- US-A1- 2017 111 880

## Description

### TECHNICAL FIELD

The present invention relates to the field of communications and, in particular, to a method and apparatus for applying reference signal configuration information, and a storage medium.

### BACKGROUND

Currently, a heated discussion is being performed on the physical layer technology of the new radio (NR) in radio access network 1 (RANI) of the 3rd Generation Partnership Project (3GPP). Compared with the existing long term evolution (LTE) system, an NR physical layer aims at a more flexible and efficient design. Based on this, a flexible resource configuration manner appears to become an important trend, since a resource configuration manner supported by the existing LTE cannot flexibly adapt to dynamic changes of traffic loads.

For LTE frame structure type 1 (FS1), 10 sub-frames are used for either an uplink transmission or a downlink transmission. Such a frame structure may only be used in a frequency division duplex (FDD) mode. For LTE frame structure type 2 (FS2), each sub-frame may be used as one of an uplink sub-frame, a downlink sub-frame, or a special sub-frame, and is configured with a fixed downlink (DL) and up link (UL) proportion. This structure may only be used for time division duplex (TDD). The existing two frame structures cannot flexibly adapt to flexible changes of the traffic loads. Based on this, flexible duplex is introduced into the NR, that is, different devices may flexibly use the configured resources to perform the uplink transmission or the downlink transmission, and this feature significantly improves system performance.

However, flexible configurations of resources will result in strong cross link interference (CLI). For example, when different neighboring cells perform transmissions in different link directions on the same time-frequency resource or an overlapping time-frequency resource, the strong CLI will occur, thereby causing a significant decrease in the system performance. The CLI includes interference between terminals and interference between base stations. Specifically, the interference between terminals means that one terminal performs the uplink transmission and the other terminal in the neighboring cell performs a downlink reception. At this time, on a transmitter side, sending downlink information in the neighboring cell will interfere with the transmission of the terminal and/or an uplink reception of a serving cell of the terminal. On a receiver side, the uplink transmission of uplink information of the terminal will interfere with the reception of the downlink information of the other terminal in the neighboring cell. Similarly, the interference between base stations is caused in the same way.

Currently, no reasonable solutions have been proposed for the problem that the CLI in the flexible duplex technology cannot be estimated and identified.

In the patent application US20170111880A1, the invention provides a method for performing positioning by a terminal in a wireless communication system including: receiving assistance data including reference cell information (ReferenceCellInfo) and neighboring cell information (NeighbourCellInfo) from a serving base station; receiving a positioning reference signal from each of a reference cell and at least one neighboring cell based on the received assistance data; measuring a reference signal time difference (RSTD) for the reference cell of at least one neighboring cell by using the received positioning reference signal; and reporting the measured RSTD to the serving base station.

In the patent application CN106374981A & EP3328116, the present disclosure relates to an electronic device in a radio communications system and a radio communications method. The radio communications system comprises multiple cells, and the multiple cells comprise a current cell in which an electronic device is located and a neighboring cell. The electronic device comprises: one or more processing circuits. The processing circuits are configured to execute the following operations: obtaining allocation information about reference signals of the current cell and the neighboring cell; determining quality of an available reference signal in the current cell based on the allocation information; and allocating the available reference signal to user equipment based on the quality of the available reference signal. By means of the electronic device and the radio communications method according to the present disclosure, the quality of an available reference signal can be monitored by using interaction information between base stations, thereby implementing optimal configuration of reference signals and improving overall performance of a system.

### SUMMARY

Embodiments of the present invention provide a method and apparatus for applying reference signal configuration information and a storage medium, so as to solve at least the problem in the related art that CLI in a flexible duplex technology cannot be estimated and identified.

A method for applying reference signal configuration information is provided. The method includes steps described below. A base station acquires the reference signal configuration information, where the reference signal configuration information includes at least one of: reference signal configuration information of a local cell, reference signal configuration information of a neighboring cell, or reference signal configuration information of a terminal in the neighboring cell. The base station performs a transmission or a measurement according to the acquired reference signal configuration information, wherein the base station receives a measurement result and/or a corresponding measurement resource information reported by the terminal after the terminal performs a measurement based on received reference signal configuration information.

A method for applying reference signal configuration information is further provided. The method includes steps described below. A terminal acquires the reference signal configuration information, where the reference signal configuration information includes at least one of: reference signal configuration information of a local cell, reference signal configuration information of a neighboring cell, or reference signal configuration information of a terminal in the neighboring cell. The terminal performs a reception, a transmission or a measurement according to the acquired reference signal configuration information.

An apparatus for applying reference signal configuration information is further provided. The apparatus is disposed in a terminal and includes a first acquisition module and a first application module. The first acquisition module is configured to acquire the reference signal configuration information, where the reference signal configuration information includes at least one of: reference signal configuration information of a local cell, reference signal configuration information of a neighboring cell, or reference signal configuration information of a terminal in the neighboring cell. The first application module is configured to perform a reception, a transmission or a measurement according to the acquired reference signal configuration information.

In the present invention, the base station and the terminal may separately acquire the reference signal configuration information of the local cell and/or the reference signal configuration information of the neighboring cell, and perform the transmission or the measurement according to the acquired reference signal configuration information, thereby solving the problem in the related art that the CLI in the flexible duplex technology cannot be estimated and identified. According to the technical solutions of the present invention, the base station and the terminal may measure a link which is likely to cause interference in the neighboring cell while measuring a link in the local cell, so that the CLI can be estimated and identified, and CLI between neighboring cells is effectively avoided.

### BRIEF DESCRIPTION OF DRAWINGS

The drawings described herein are used for providing a further understanding of the present invention and form a part of the present application. The exemplary embodiments and descriptions thereof in the present invention are used to explain the present invention and do not limit the present invention in any improper way. In the drawings:
FIG. 1 is a flowchart of an optional method for applying reference signal configuration information according to an embodiment of the present invention;
FIG. 2 is a flowchart of an optional method for applying reference signal configuration information according to an embodiment of the present invention;
FIG. 3 is a block diagram of an optional apparatus for applying reference signal configuration information according to an embodiment of the present invention;
FIG. 4 is a block diagram of an optional apparatus for applying reference signal configuration information according to an embodiment of the present invention;
FIG. 5 is schematic diagram 1 of a time-frequency pattern of a reference signal in a resource block (RB) according to embodiment 3 of the present invention;
FIG. 6 is schematic diagram 2 of the time-frequency pattern of the reference signal in the RB according to embodiment 3 of the present invention;
FIG. 7 is schematic diagram 3 of the time-frequency pattern of the reference signal in the RB according to embodiment 3 of the present invention;
FIG. 8 is schematic diagram 4 of the time-frequency pattern of the reference signal in the RB according to embodiment 3 of the present invention;
FIG. 9 is schematic diagram 5 of the time-frequency pattern of the reference signal in the RB according to embodiment 3 of the present invention;
FIG. 10 is schematic diagram 6 of the time-frequency pattern of the reference signal in the RB according to embodiment 3 of the present invention;
FIG. 11 is schematic diagram 7 of the time-frequency pattern of the reference signal in the RB according to embodiment 3 of the present invention;
FIG. 12 is schematic diagram 8 of the time-frequency pattern of the reference signal in the RB according to embodiment 3 of the present invention;
FIG. 13 is schematic diagram 9 of the time-frequency pattern of the reference signal in the RB according to embodiment 3 of the present invention;
FIG. 14 is schematic diagram 10 of the time-frequency pattern of the reference signal in the RB according to embodiment 3 of the present invention;
FIG. 15 is schematic diagram 11 of the time-frequency pattern of the reference signal in the RB according to embodiment 3 of the present invention;
FIG. 16 is schematic diagram 12 of the time-frequency pattern of the reference signal in the RB according to embodiment 3 of the present invention;
FIG. 17 is schematic diagram 13 of the time-frequency pattern of the reference signal in the RB according to embodiment 3 of the present invention;
FIG. 18 is schematic diagram 14 of the time-frequency pattern of the reference signal in the RB according to embodiment 3 of the present invention;
FIG. 19 is schematic diagram 15 of the time-frequency pattern of the reference signal in the RB according to embodiment 3 of the present invention;
FIG. 20 is a structural diagram of hardware of an apparatus for applying reference signal configuration information according to an embodiment of the present invention.

### DETAILED DESCRIPTION

Hereinafter, the present invention will be described in detail with reference to the drawings in conjunction with embodiments. It should be noted that if not in collision, the embodiments in the present application and features therein may be combined with each other, technical solutions in the embodiments may be split or combined with each other. The embodiments of the present invention are not limited to application scenarios of the technical solutions described below.

It should be noted that the terms "first," "second", and the like in the description, the claims and the above drawings of the present invention are used for distinguishing between similar objects and are not necessarily used for describing a particular order or sequence. It is to be understood that the data used in this way is interchangeable under appropriate circumstances so that the embodiments of the present invention described herein can also be implemented in a sequence not described or illustrated herein. Furthermore, the terms "including" and "having", as well as any variations thereof, are intended to cover a non-exclusive inclusion, so that a process, method, system, article, or device that includes a series of steps or elements may include not only the expressly listed steps or elements but also other steps or elements that are not expressly listed or inherent to such a process, method, article, or device.

### Embodiment 1

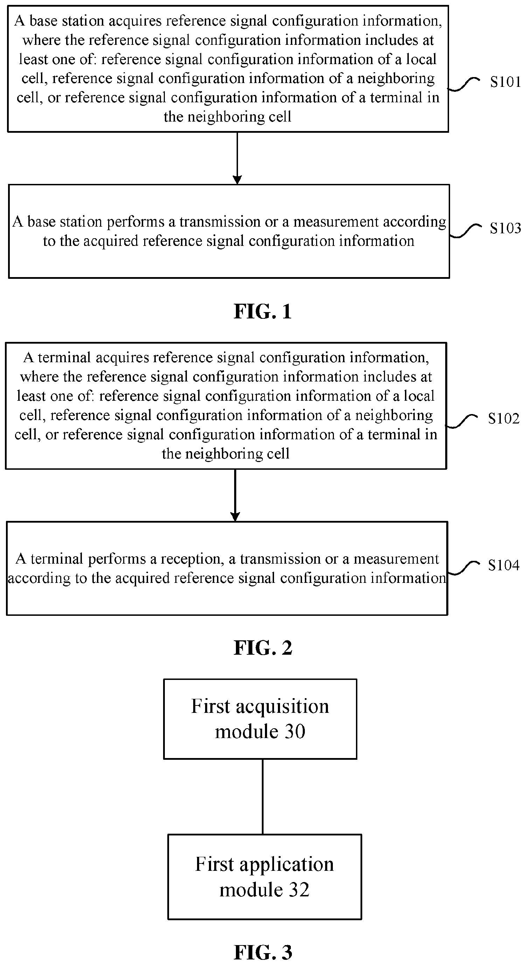

FIG. 1 is a flowchart of an optional method for applying reference signal configuration information according to an embodiment of the present invention. As shown in FIG. 1, according to an aspect of the present invention, a method for applying reference signal configuration information is provided. The method includes steps described below.

In step S101, a base station acquires the reference signal configuration information. The reference signal configuration information includes at least one of: reference signal configuration information of a local cell, reference signal configuration information of a neighboring cell, or reference signal configuration information of a terminal in the neighboring cell.

In step S103, the base station performs a transmission or a measurement according to the acquired reference signal configuration information.

Through the preceding method, the base station acquires the reference signal configuration information, where the reference signal configuration information includes at least one of: the reference signal configuration information of the local cell, the reference signal configuration information of the neighboring cell, or the reference signal configuration information of the terminal in the neighboring cell; and the base station performs the transmission or the measurement according to the acquired reference signal configuration information, thereby solving the problem in the related art that CLI in a flexible duplex technology cannot be estimated and identified. According to the technical solution of the present invention, the base station may measure a link which is likely to cause interference in the neighboring cell while measuring a link in the local cell, so that the CLI can be estimated and identified, and CLI between neighboring cells is effectively avoided.

It should be noted that the transmission herein may include a transmission of a reference signal, and the measurement herein may include a channel estimation and a channel interference measurement.

In an embodiment, the step in which the base station acquires the reference signal configuration information includes that the base station acquires reference signal configuration information sent by a neighboring base station. The reference signal configuration information sent by the neighboring base station includes at least one of: the reference signal configuration information of the neighboring cell or the reference signal configuration information of the terminal in the neighboring cell.

In an embodiment, the method further includes that the base station sends the reference signal configuration information of the local cell and/or reference signal configuration information of a terminal in the local cell to the neighboring base station or a terminal in the neighboring base station.

In an embodiment, the reference signal configuration information includes at least one of: a type or a type set of the reference signal, resource information of the reference signal, a sequence, a subcarrier spacing, power, or a measurement request indication.

In an embodiment, the type or the type set of the reference signal includes at least one of: a zero power reference signal or a non-zero power reference signal.

In an embodiment, the resource information of the reference signal includes at least one of: a starting position of a time domain resource, an interval between time domain resources or a period of time domain resources, a symbol position, a symbol position set, a time domain pattern, time domain time window information, a starting position of a frequency domain resource, a size of the frequency domain resource, an interval between frequency domain resources or a period of frequency domain resources, a frequency domain pattern, an index of a correspondence between a symbol and the frequency domain pattern, a port index, a beam index, or a basic time-frequency pattern or pattern index.

It should be noted that the basic time-frequency pattern herein may be a "component RS RE pattern", which refers to a unit or a pattern composed of the number A of time domain symbols and/or the number B of frequency domain resource elements (REs) in one resource block (RB) for a specific port number. The number A of symbols may be consecutive symbols or inconsecutive symbols. The number B of frequency domain REs may be consecutive REs or inconsecutive REs in frequency domain. For example, for one port, the basic pattern may be determined by one symbol in time domain and a starting RE position and/or the number of (consecutive or inconsecutive) REs in the frequency domain. Here, if the starting RE position in the frequency domain is position 0 and the number of occupied REs is 1, the basic pattern may be composed of one symbol in the time domain and one RE in the frequency domain. The basic pattern may be extended according to parameters such as the interval or the period in the time domain or the frequency domain to obtain different time domain patterns and/or frequency domain patterns. Similarly, for antenna ports with port numbers of 2, 4, 8, 12, 16, 24 or more, a basic reference signal pattern may be determined by determining a starting position and/or the number of occupied symbols or REs in the time domain and/or the frequency domain. A specific pattern design may be referred to at least one of specific embodiments in Embodiment 3. Furthermore, basic reference signal patterns on different symbols and/or on different frequency bands may be the same or different.

In an embodiment, the time domain time window information includes at least one of: a starting position of a time window, a length of the time window, a starting resource position of the reference signal within the time window, or an interval between reference signal resources within the time window.

In an embodiment, the base station performs the transmission or the measurement of the reference signal on at least one of the reference signal resources within the time window.

In an embodiment, the base station acquires the reference signal configuration information through at least one of: high layer radio resource control (RRC) signaling, physical layer downlink control information (DCI) signaling, a pre-agreement between devices, or a predefinition.

In an embodiment, the step in which the base station performs the transmission according to the acquired reference signal configuration information includes that the base station periodically sends the reference signal according to the acquired reference signal configuration information or that the base station aperiodically sends the reference signal according to the acquired reference signal configuration information.

In an embodiment, the step in which the base station aperiodically sends the reference signal includes a step described below. The base station acquires first measurement request information sent by the neighboring base station and sends the reference signal according to the first measurement request information. Alternatively, the base station receives first DCI signaling and sends the reference signal according to a trigger or an indication of the first DCI signaling.

In an embodiment, a manner for determining a position at which the base station sends the reference signal includes at least one of manners described below. After acquiring the first measurement request information, the base station determines the position of the reference signal to be a position at which the base station periodically sends the reference signal. The base station triggers the sending of the reference signal according to the first DCI signaling, and/or determines the position of the reference signal according to information of a sending position of the reference signal which is indicated by the first DCI signaling. The base station triggers the sending of the reference signal according to the first DCI signaling, receives second DCI signaling, and determines the position of the reference signal according to position information of the reference signal which is indicated by the second DCI signaling. The base station determines the position of the reference signal according to a timing relationship of n+k based on a position index n of the first DCI signaling, where k is a value of the timing relationship.

In an embodiment, the first DCI signaling carries the timing relationship k, where k is an integer greater than or equal to 0 or a set of integers greater than or equal to 0.

In an embodiment, the first DCI signaling or the second DCI signaling further carries at least one of: a time domain symbol position or a symbol position set of the reference signal, a frequency domain pattern index of the reference signal, or an index of a correspondence between a symbol and a frequency domain pattern of the reference signal.

In an embodiment, the method further includes at least one of steps described below. The base station vacates a resource position of a reference signal of the neighboring base station and/or the terminal in the neighboring base station. The base station adjusts a transmitted beam or a received beam. The base station adjusts power of the transmission.

In an embodiment, the step in which the base station performs the measurement according to the acquired reference signal configuration information includes a step described below. The base station periodically performs a channel measurement and/or an interference measurement according to the acquired reference signal configuration information. Alternatively, the base station aperiodically performs the channel measurement and/or the interference measurement according to the acquired reference signal configuration information.

In an embodiment, reference signals of neighboring devices have the same configuration information or different configuration information. The neighboring device includes the neighboring base station or the terminal in the neighboring base station. The configuration information includes at least one of: a sequence, a subcarrier spacing, a pattern, a resource position, a cyclic shift, or a symbol.

In an embodiment, when the reference signals of the neighboring devices have the same configuration information, the neighboring devices perform multiplexing or orthogonalization in at least one of manners described below. Based on a same cyclic shift set, different devices use different cyclic shifts in the same cyclic shift set or cyclic shifts in different cyclic shift subsets of the same cyclic shift set. Based on a same sequence, the different devices use different scrambling manners.

FIG. 2 is a flowchart of an optional method for applying reference signal configuration information according to an embodiment of the present invention. As shown in FIG. 2, the method includes steps described below.

In step S 102, a terminal acquires reference signal configuration information. The reference signal configuration information includes at least one of: reference signal configuration information of a local cell, reference signal configuration information of a neighboring cell, or reference signal configuration information of a terminal in the neighboring cell.

In step S104, the terminal performs a reception, a transmission or a measurement according to the acquired reference signal configuration information.

Through the preceding method, the terminal acquires the reference signal configuration information, where the reference signal configuration information includes at least one of: the reference signal configuration information of the local cell, the reference signal configuration information of the neighboring cell, or the reference signal configuration information of the terminal in the neighboring cell; and the terminal performs the reception, transmission or measurement according to the acquired reference signal configuration information, thereby solving the problem in the related art that CLI in a flexible duplex technology cannot be estimated and identified. According to the technical solution provided by the present invention, a base station or the terminal may measure a link which is likely to cause interference in the neighboring cell while measuring a link in the local cell, so that the CLI can be estimated and identified, and CLI between neighboring cells is effectively avoided.

It should be noted that the reception or the transmission herein may include a reception or a transmission of a reference signal, and the measurement herein may include a channel estimation and a channel interference measurement.

In an embodiment, the terminal acquires the reference signal configuration information through at least one of: high layer RRC signaling, physical layer DCI signaling, a pre-agreement between devices, or a predefinition.

In an embodiment, the step in which the terminal acquires the reference signal configuration information includes at least one of steps described below. The terminal acquires the reference signal configuration information of the neighboring cell from a neighboring base station. The terminal acquires the reference signal configuration information of the terminal in the neighboring cell from a terminal in the neighboring base station. The terminal acquires from a serving base station at least one of: the reference signal configuration information of the local cell, the reference signal configuration information of the neighboring cell, or the reference signal configuration information of the terminal in the neighboring cell.

In an embodiment, the reference signal configuration information includes at least one of: a type or a type set of the reference signal, resource information of the reference signal, a sequence, a subcarrier spacing, power, or a measurement request indication.

In an embodiment, the type or the type set of the reference signal includes at least one of: a zero power reference signal or a non-zero power reference signal.

In an embodiment, the resource information of the reference signal includes at least one of: a starting position of a time domain resource, an interval between time domain resources or a period of time domain resources, a symbol position, a symbol position set, a time domain pattern, time domain time window information, a starting position of a frequency domain resource, a size of the frequency domain resource, an interval between frequency domain resources or a period of frequency domain resources, a frequency domain pattern, an index of a correspondence between a symbol and the frequency domain pattern, a port index, a beam index, or a basic time-frequency pattern or pattern index.

In an embodiment, the time domain time window information includes at least one of: a starting position of a time window, a length of the time window, a starting resource position of the reference signal within the time window, or an interval between reference signal resources within the time window.

In an embodiment, the terminal performs the transmission or the measurement of the reference signal on at least one of the reference signal resources within the time window.

In an embodiment, the step in which the terminal performs the transmission according to the acquired reference signal configuration information includes that the terminal periodically sends the reference signal according to the acquired reference signal configuration information, or that the terminal aperiodically sends the reference signal according to the acquired reference signal configuration information.

In an embodiment, the step in which the terminal aperiodically sends the reference signal according to the acquired reference signal configuration information includes a step described below. The terminal acquires second measurement request information sent by the terminal in the neighboring cell and sends the reference signal according to the second measurement request information. Alternatively, the terminal acquires third DCI signaling and sends the reference signal according to a trigger and/or an indication of the third DCI signaling.

In an embodiment, a manner for determining a position at which the terminal sends the reference signal includes at least one of manners described below. After acquiring the second measurement request information, the terminal determines the position of the reference signal to be a position at which the terminal periodically sends the reference signal. The terminal triggers the sending of the reference signal according to the third DCI signaling, and/or determines the position of the reference signal according to information of a sending position of the reference signal which is indicated by the third DCI signaling. The terminal triggers the sending of the reference signal according to the third DCI signaling, receives fourth DCI signaling, and determines the position of the reference signal according to position information of the reference signal which is indicated by the fourth DCI signaling. The terminal determines the position of the reference signal according to a timing relationship of n+k based on a position index n of the third DCI signaling, where k is a value of the timing relationship.

In an embodiment, the third DCI signaling carries the timing relationship k, where k is an integer greater than or equal to 0 or a set of integers greater than or equal to 0.

In an embodiment, the third DCI signaling or the fourth DCI signaling further carries at least one of: a time domain symbol position or a symbol position set of the reference signal, a frequency domain pattern index of the reference signal, or an index of a correspondence between a symbol and a frequency domain pattern of the reference signal.

In an embodiment, the terminal receives an indication of the serving base station, and/or performs, according to the indication of the serving base station, at least one of operations described below. The terminal vacates a resource position of a reference signal of the neighboring base station and/or the terminal in the neighboring base station. The terminal adjusts a transmitted beam or a received beam. The terminal adjusts power of the transmission.

In an embodiment, DCI of the serving base station indicates that the terminal performs at least one of: vacating the resource position of the reference signal of the neighboring base station and/or the terminal in the neighboring base station, adjusting the transmitted beam or the received beam, or adjusting the power of the transmission.

In an embodiment, the step in which the terminal performs the measurement according to the acquired reference signal configuration information includes that the terminal periodically performs a channel measurement and/or an interference measurement according to the acquired reference signal configuration information, or that the terminal aperiodically performs the channel measurement and/or the interference measurement according to the acquired reference signal configuration information.

In an embodiment, reference signals of neighboring devices have the same configuration information or different configuration information. The configuration information includes at least one of: a sequence, a subcarrier spacing, a pattern, a resource position, a cyclic shift, or a symbol.

It should be noted that the above-mentioned methods in the embodiments of the present invention and the alternative implementation manners thereof may be combined arbitrarily, which is not limited in this embodiment.

### Embodiment 2

This embodiment further provides an apparatus for applying reference signal configuration information. The apparatus is disposed in a base station, and configured to implement the embodiments and the alternative implementation manners of the method on a base station side. What has been described will not be repeated herein. As used below, the term "module" may be software, hardware or a combination thereof capable of implementing predetermined functions. Although the apparatus in the embodiments described below is alternatively implemented by software, implementation by hardware or by a combination of software and hardware is also possible and conceived.

The embodiment of the present invention further provides the apparatus for applying reference signal configuration information. The apparatus is disposed in the base station. FIG. 3 is a block diagram of an optional apparatus for applying reference signal configuration information according to an embodiment of the present invention. As shown in FIG. 3, the apparatus includes a first acquisition module 30 and a first application module 32. The first acquisition module 30 is configured to acquire the reference signal configuration information. The reference signal configuration information includes at least one of: reference signal configuration information of a local cell, reference signal configuration information of a neighboring cell, or reference signal configuration information of a terminal in the neighboring cell. The first application module 32 is configured to perform a transmission or a measurement according to the acquired reference signal configuration information.

Through the preceding apparatus, the first acquisition module 30 acquires the reference signal configuration information, where the reference signal configuration information includes at least one of: the reference signal configuration information of the local cell, the reference signal configuration information of the neighboring cell, or the reference signal configuration information of the terminal in the neighboring cell; and the first application module 32 performs the transmission or the measurement according to the acquired reference signal configuration information, thereby solving the problem in the related art that CLI in a flexible duplex technology cannot be estimated and identified. According to the technical solution provided by the present invention, the base station may measure a link which is likely to cause interference in the neighboring cell while measuring a link in the local cell, so that the CLI can be estimated and identified, and CLI between neighboring cells is effectively avoided.

In an embodiment, the first acquisition module further includes a first acquisition unit. The first acquisition unit is configured to acquire reference signal configuration information sent by a neighboring base station. The reference signal configuration information sent by the neighboring base station includes at least one of: the reference signal configuration information of the neighboring cell or the reference signal configuration information of the terminal in the neighboring cell.

In an embodiment, the apparatus further includes a sending module. The sending module is configured to send the reference signal configuration information of the local cell and/or reference signal configuration information of a terminal in the local cell to the neighboring base station or a terminal in the neighboring base station.

It should be noted that the transmission herein may include a transmission of a reference signal, and the measurement herein may include a channel estimation and a channel interference measurement.

In an embodiment, the reference signal configuration information includes at least one of: a type or a type set of the reference signal, resource information of the reference signal, a sequence, a subcarrier spacing, power, or a measurement request indication.

In an embodiment, the type or the type set of the reference signal includes at least one of: a zero power reference signal or a non-zero power reference signal.

In an embodiment, the resource information of the reference signal includes at least one of: a starting position of a time domain resource, an interval between time domain resources or a period of time domain resources, a symbol position, a symbol position set, a time domain pattern, time domain time window information, a starting position of a frequency domain resource, a size of the frequency domain resource, an interval between frequency domain resources or a period of frequency domain resources, a frequency domain pattern, an index of a correspondence between a symbol and the frequency domain pattern, a port index, a beam index, or a basic time-frequency pattern or pattern index.

It should be noted that the basic time-frequency pattern herein may be a "component RS RE pattern". For example, six possible frequency-domain positions of the basic time-frequency pattern exist in the first column. According to different configurations as for how the pattern is repeated in frequency domain, or how many times the pattern is repeated, or an interval at which the pattern is repeated, different RS patterns may be obtained, but the basic pattern remains unchanged. A specific pattern configuration is described in the subsequent embodiments.

In an embodiment, the time domain time window information includes at least one of: a starting position of a time window, a length of the time window, a starting resource position of the reference signal within the time window, or an interval between reference signal resources within the time window.

In an embodiment, the first application module is further configured to perform the transmission or the measurement of the reference signal on the reference signal resources within the time window.

In an embodiment, the base station acquires the reference signal configuration information through at least one of: high layer RRC signaling, physical layer DCI signaling, a pre-agreement between devices, or a predefinition.

In an embodiment, the first application module further includes a first application unit and a second application unit. The first application unit is configured to periodically send the reference signal according to the acquired reference signal configuration information. The second application unit is configured to aperiodically send the reference signal according to the acquired reference signal configuration information.

In an embodiment, the first application module is further configured to acquire first measurement request information sent by the neighboring base station and send the reference signal according to the first measurement request information; or to receive first DCI signaling and send the reference signal according to a trigger or an indication of the first DCI signaling.

In an embodiment, a manner for determining a position at which the base station sends the reference signal includes at least one of manners described below. After acquiring the first measurement request information, the base station determines the position of the reference signal to be a position at which the base station periodically sends the reference signal. The base station triggers the sending of the reference signal according to the first DCI signaling, and determines the position of the reference signal according to the indication of the first DCI signaling. The base station triggers the sending of the reference signal according to the first DCI signaling, receives second DCI signaling, and determines the position of the reference signal according to an indication of the second DCI signaling. The base station determines the position of the reference signal according to a timing relationship of n+k based on a position index n of the first DCI signaling, where k is a value of the timing relationship.

In an embodiment, the first DCI signaling carries the timing relationship k, where k is an integer greater than or equal to 0 or a set of integers greater than or equal to 0.

In an embodiment, the first DCI signaling or the second DCI signaling further carries at least one of: a time domain symbol position or a symbol position set of the reference signal, a frequency domain pattern index of the reference signal, or an index of a correspondence between a symbol and a frequency domain pattern of the reference signal.

In an embodiment, the base station vacates a resource position of a reference signal of the neighboring base station and/or the terminal in the neighboring base station; the base station adjusts a transmitted beam or a received beam; or the base station adjusts power of the transmission.

In an embodiment, the first application unit is further configured to periodically perform a channel measurement and/or an interference measurement according to the acquired reference signal configuration information; and the second application unit is further configured to aperiodically perform the channel measurement and/or the interference measurement according to the acquired reference signal configuration information.

In an embodiment, reference signals of neighboring devices have the same configuration information or different configuration information. The neighboring device includes the neighboring base station or the terminal in the neighboring base station. The configuration information includes at least one of: a sequence, a subcarrier spacing, a pattern, a resource position, a cyclic shift, or a symbol.

In an embodiment, when the reference signals of the neighboring devices have the same configuration information, the neighboring devices perform multiplexing or orthogonalization in at least one of manners described below. Based on a same cyclic shift set, different devices use different cyclic shifts in the same cyclic shift set or cyclic shifts in different cyclic shift subsets of the same cyclic shift set. Based on a same sequence, the different devices use different scrambling manners.

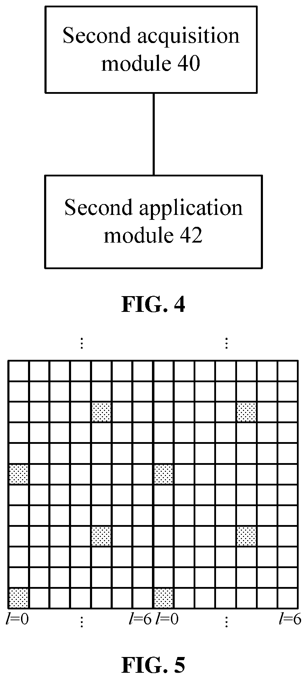

This embodiment further provides an apparatus for applying reference signal configuration information. The apparatus is disposed in a terminal and configured to implement the embodiments and the alternative implementation manners of the method on a terminal side. The embodiment of the present invention further provides an apparatus of applying reference signal configuration information. The apparatus is disposed in the terminal. FIG. 4 is a block diagram of an optional apparatus for applying reference signal configuration information according to an embodiment of the present invention. As shown in FIG. 4, the apparatus includes a second acquisition module 40 and a second application module 42. The second acquisition module 40 is configured to acquire the reference signal configuration information. The reference signal configuration information includes at least one of: reference signal configuration information of a local cell, reference signal configuration information of a neighboring cell, or reference signal configuration information of a terminal in the neighboring cell. The second application module 42 is configured to perform a reception, a transmission or a measurement according to the acquired reference signal configuration information.

Through the preceding apparatus, the second acquisition module 40 acquires the reference signal configuration information, where the reference signal configuration information includes at least one of: the reference signal configuration information of the local cell, the reference signal configuration information of the neighboring cell, or the reference signal configuration information of the terminal in the neighboring cell; and the second application module 42 performs the reception, transmission or measurement according to the acquired reference signal configuration information, thereby solving the problem in the related art that CLI in a flexible duplex technology cannot be estimated and identified. According to the technical solution provided by the present invention, a base station or the terminal may measure a link which is likely to cause interference in the neighboring cell while measuring a link in the local cell, so that the CLI can be estimated and identified, and CLI between neighboring cells is effectively avoided.

In an embodiment, the second acquisition module 40 includes a second acquisition unit, a third acquisition unit and a fourth acquisition unit. The second acquisition unit is configured to acquire the reference signal configuration information of the neighboring cell from a neighboring base station. The third acquisition unit is configured to acquire the reference signal configuration information of the terminal in the neighboring cell from a terminal in the neighboring base station. The fourth acquisition unit configured to acquire from a serving base station at least one of: the reference signal configuration information of the local cell, the reference signal configuration information of the neighboring cell, or the reference signal configuration information of the terminal in the neighboring cell.

In an embodiment, the second acquisition module 40 acquires the reference signal configuration information through at least one of: high layer RRC signaling, physical layer DCI signaling, a pre-agreement between devices, or a predefinition.

In an embodiment, the reference signal configuration information includes at least one of: a type or a type set of a reference signal, resource information of the reference signal, a sequence, a subcarrier spacing, power, or a measurement request indication.

In an embodiment, the type or the type set of the reference signal includes at least one of: a zero power reference signal or a non-zero power reference signal.

In an embodiment, the resource information of the reference signal includes at least one of: a starting position of a time domain resource, an interval between time domain resources or a period of time domain resources, a symbol position, a symbol position set, a time domain pattern, time domain time window information, a starting position of a frequency domain resource, a size of the frequency domain resource, an interval between frequency domain resources or a period of frequency domain resources, a frequency domain pattern, an index of a correspondence between a symbol and the frequency domain pattern, a port index, a beam index, or a basic time-frequency pattern or pattern index.

In an embodiment, the time domain time window information includes at least one of: a starting position of a time window, a length of the time window, a starting resource position of the reference signal within the time window, or an interval between reference signal resources within the time window.

In an embodiment, the second application module 42 is further configured to perform the transmission or the measurement of the reference signal on the reference signal resources within the time window.

In an embodiment, the second application module further includes a third application unit and a fourth application unit. The third application unit is configured to periodically send the reference signal according to the acquired reference signal configuration information. The fourth application unit is configured to aperiodically send the reference signal according to the acquired reference signal configuration information.

In an embodiment, the third application unit is further configured to acquire second measurement request information sent by the terminal in the neighboring cell and send the reference signal according to the second measurement request information, or to acquire third DCI signaling and send the reference signal according to a trigger and/or an indication of the third DCI signaling.

In an embodiment, a manner for determining a position at which the second application module 42 sends the reference signal includes at least one of manners described below. After acquiring the second measurement request information, the second application module 42 determines the position of the reference signal to be a position at which the reference signal is periodically sent. The second application module 42 triggers the sending of the reference signal according to the third DCI signaling, and determines the position of the reference signal according to the indication of the third DCI signaling. The second application module 42 triggers the sending of the reference signal according to the third DCI signaling, receives fourth DCI signaling, and determines the position of the reference signal according to an indication of the fourth DCI signaling. The second application module 42 determines the position of the reference signal according to a timing relation of n+k based on a position index n of the third DCI signaling, where k is a value of the timing relationship.

In an embodiment, the third DCI signaling carries the timing relationship k, where k is an integer greater than or equal to 0 or a set of integers greater than or equal to 0.

In an embodiment, the third DCI signaling or the fourth DCI signaling further carries at least one of: a time domain symbol position or a symbol position set of the reference signal, a frequency domain pattern index of the reference signal, or an index of a correspondence between a symbol and a frequency domain pattern of the reference signal.

In an embodiment, the terminal vacates a resource position of a reference signal of the neighboring base station and/or the terminal in the neighboring base station; the terminal adjusts a transmitted beam or a received beam; or the terminal adjusts power of the transmission. It should be noted that these operations may be performed by the terminal according to an indication of the serving base station after the terminal receives the indication of the serving base station.

In an embodiment, the third application unit is further configured to periodically perform a channel measurement and/or an interference measurement according to the acquired reference signal configuration information; and the fourth application unit is further configured to aperiodically perform the channel measurement and/or the interference measurement according to the acquired reference signal configuration information.

In an embodiment, reference signals of neighboring devices have the same configuration information or different configuration information. The configuration information includes at least one of: a sequence, a subcarrier spacing, a pattern, a resource position, a cyclic shift, or a symbol.

### Embodiment 3

A method for designing a reference signal in the present invention is not limited to a certain reference signal. The reference signal may be one of a demodulation reference signal (DMRS), a channel state information reference signal (CSI-RS), a sounding reference signal (SRS), a phase trace reference signal (PTRS), a newly designed reference signal, or the like. The CSI-RS is further divided into a zero power CSI-RS (ZP CSI-RS) and a non-zero power CSI-RS (NZP CSI-RS).

The reference signal designed in the present invention may be used for implementing at least one of the following functions: control channel demodulation, data channel demodulation, channel state information acquisition, a CLI measurement, an interference link identification, an interference source identification, beam tracking, beam management, or at least one of all functions of the reference signal in the existing art.

Since no cell-specific reference signal (CRS) is used in an NR technology, a physical downlink control channel (PDCCH) cannot be quickly demodulated or channel state information cannot be quickly acquired. Even if the DMRS in a data region may be used for demodulating a control channel, a rear position of the DMRS will lead to too large a demodulation delay of the PDCCH. Similarly, the CSI-RS sent in the data region may also be used for acquiring the channel state information, but the CSI-RS in the existing art cannot be used for quickly acquiring the channel state information and/or interference conditions (e.g., an interference link direction, an interference source, an interference strength/level, etc.). Based on this, it is necessary to design a prepositive reference signal for satisfying at least one of the preceding requirements. In addition, some additional reference signals may be designed to supplement or enhance performance of the reference signal, or to solve problems in other scenarios. At least one of a frequency domain pattern, a frequency domain density, or the number of multiplexed ports of the additional reference signals may be the same as or different from that of the antecedent reference signal. The reference signals designed in the present invention are applicable to uplink and/or downlink transmissions.

In the following method, symbol indexes are 0, 1, ..., in a chronological order, and subcarrier indexes in a physical resource block (PRB) are 0, 1, ..., 11 in an ascending order in the frequency domain. A time-frequency position of the reference signal is denoted by (X, Y), where X represents the number of frequency domain symbols of the reference signal, and Y represents the number of time domain resources. A frequency domain resource may be a RE or an RB. Here, X and Y in (X, Y) for representing the time-frequency position of the reference signal are not limited to a former time domain representation and a latter frequency domain representation. In practice, the frequency domain may be represented before the time domain. In the following embodiments, an example in which the frequency domain is represented before the time domain will be used for describing the method for designing a reference signal in this embodiment.

The existing reference signals such as the DMRS, the CSI-RS or the SRS used in the NR technology have rear positions, which is not beneficial for reducing a processing delay of a device, or not applicable to a self-contained feedback manner or a multi-carrier scenario, or not beneficial for inter-cell coordination or interference estimation based on the reference signal. In addition, if the reference signal is mainly used for the interference estimation, the frequency domain density of the reference signal may be relatively sparse.

In the existing art, the reference signal may be used for acquiring the channel state information and/or the beam management and/or the beam tracking. In duplex techniques, the reference signal also needs to be used for an interference measurement and/or identifying the interference link direction and/or the interference source.

Based on this, a time domain position and/or a frequency domain position and/or a time domain density and/or the frequency domain density and/or the frequency domain pattern of the reference signal may be different according to different application scenarios and/or different design requirements. From this point of view, in different application scenarios, a reference signal pattern needs to be changed and/or notified to the corresponding device. Furthermore, sending manners, time domain and/or frequency domain resource positions and notification manners of the reference signal in different scenarios need to be formulated. How to send the reference signal, time domain and/or frequency resource positions and a notification manner in a particular scenario need to be formulated.

The method in the present invention is applicable to a base station side and/or a user equipment (UE) side. The description or the method related to a sub-frame in the embodiments described below is also applicable to a slot, a specific time unit, a time unit composed of one or more symbols, and the like. Similarly, a method for designing a reference signal pattern (such as a resource element (RE) pattern) in one RB in the embodiments described below may also be applicable to the design of the RB, an RB group (RBG), a sub-band, a RE group (REG), or other patterns. Optionally, an RB pattern, an RBG pattern, a sub-band pattern, or a REG pattern may also be designed.

The reference signal pattern in the embodiment of the present invention is not limited to time domain positions in the alternative embodiments, and may also be used for at least one symbol in a unit composed of sub-frames or slots or specific symbols. In an embodiment, the reference signal is located on a front symbol as much as possible in order to acquire interference information and/or a channel state as much as possible. In an embodiment, for 7 symbols, the reference signal may be located on at least one of symbols 0, 1, 2, 3, 4 and 6. For 14 symbols, the reference signal may be located on at least one of symbols 0, 1, 2, 3, 4, 6, 7, 8, 12 and 13. Furthermore, the frequency domain patterns on different symbols may be the same or different. In addition, the frequency domain pattern and/or density of the reference signal used for acquiring interference measurement information or implementing a measurement function is different from or the same as the frequency domain pattern and/or density of the reference signal in the existing art. The frequency domain pattern and/or density or time domain and/or frequency domain resource positions of the reference signal for acquiring the interference measurement information or implementing the measurement function may be configured or notified in the same manner as the reference signal in the existing art, and/or the same signaling may be used (for example, at least one pattern in a reference signal pattern set may be configured via the signaling and the pattern is used for implementing the functions of the reference signal in the existing art and/or the measurement function or an interference state acquisition function, or other functions, etc.), or the reference signal used for implementing the measurement function or the interference state acquisition function may be configured via independent signaling (high layer RRC signaling or physical layer DCI signaling).

In order to better understand the technical solutions in the embodiments of the present invention, the method for designing a reference signal in the preceding embodiments is specifically described in this embodiment through several alternative embodiments.

### Alternative embodiment 1

This embodiment provides a method for designing a reference signal. [Only a pattern (or mode) in one PRB is provided.]

A reference signal pattern may be constituted by at least one of: a starting position, a resource size, an interval between resources, the number of antenna ports, a cyclic prefix type, a sub-frame type, a sub-frame configuration, a subcarrier spacing, the number of time domain symbols, the number of frequency domain resources, or a density. Different reference signal patterns may be obtained according to different components constituting the reference signal.

For example, if the number of antenna ports is 1 and the number of time domain symbols is 1, a basic resource unit may be determined according to the resource size. For example, if the resource size is 1, the basic resource unit within one PRB may be acquired, that is, (X, Y) = (1, 1), where X represents a size of the frequency domain resource, and Y represents the number of time domain symbols. Furthermore, different patterns of the reference signal within one symbol may be obtained by setting different starting positions and/or resource intervals and/or numbers of frequency domain resources. Here, a method for constituting the reference signal pattern is only illustrated by an example, the pattern is not limited to that illustrated by the example, and any reference signal pattern constituted by the parameters is within the scope of the present invention. For example, if the number of antenna ports is 1, the starting position is 0, the resource size is 1, the interval between resources is 6, and the number of time domain symbols is 1, the reference signal pattern thus constituted is subcarrier # 0 and subcarrier # 6. For another example, if the number of antenna ports is 1, the starting position is 0, the resource size is 1, the interval between resources is 4, and the number of time domain symbols is 1, the reference signal pattern thus constituted is subcarrier # 0, subcarrier # 4, and subcarrier # 8. For another example, if the number of antenna ports is 1, the starting position is 0, the resource size is 2, the interval between resources is 4, and the number of time domain symbols is 1, the reference signal pattern thus constituted is subcarrier # 0, subcarrier # 1, subcarrier # 4, subcarrier # 5, subcarrier # 8, and subcarrier # 9.

For example, if the number of antenna ports is 2 and the number of time domain symbols is 1, the basic resource unit within one PRB is (X, Y) = (2, 1). Furthermore, different basic units may be obtained according to whether resources corresponding to two antenna ports are consecutive in the frequency domain. For example, if the resources corresponding to the two antenna ports are consecutive subcarriers in the frequency domain, positions of the basic resource unit in the frequency domain are subcarrier #a and subcarrier #a+1. If the resources corresponding to the two antenna ports are inconsecutive subcarriers in the frequency domain, the positions of the basic resource unit in the frequency domain are subcarrier #a and subcarrier #b. Furthermore, according to different starting positions in the frequency domain and different resource intervals of the basic resource unit for the two antenna ports, different reference signal patterns may be obtained. The resource interval may be an interval between inconsecutive resources corresponding to different ports or an interval between different positions of the same port in the frequency domain. The starting position may be a starting position of the consecutive resources corresponding to different ports, or may be a starting position of the frequency domain resources corresponding to different ports.

For example, if the number of antenna ports is 2, and 2 time domain symbols are occupied, the basic resource unit within one PRB is (X, Y) = (2, 2). This case is similar to the case where the number of antenna ports is 2 and the number of time domain symbols is 1, but the difference is that different basic units may be obtained according to whether the two ports correspond to consecutive resources in the time domain. For example, if the resources corresponding to the two antenna ports are consecutive symbols in the time domain, the basic resource unit includes symbol #a and symbol #a+1 in the time domain. If the resources corresponding to the two antenna ports are inconsecutive symbols in the time domain, the basic resource unit includes symbol # a and symbol # b in the time domain. Furthermore, different reference signal patterns may be obtained according to different starting positions in the frequency domain and/or different starting positions in the time domain and different intervals between time domain resources and/or different intervals between frequency domain resources of the basic resource unit for the two antenna ports.

Furthermore, the reference signal pattern corresponding to the two antenna ports may also be obtained by combining patterns of one antenna port. For one antenna port, different reference signal patterns may be obtained according to the starting position in the time domain and/or the frequency domain and the resource interval.

Similarly, for the reference signal patterns corresponding to 4, 8 or 12 antenna ports, different reference signal patterns may be obtained according to the number of time domain symbols occupied, the number of frequency domain subcarriers occupied, whether the time domain resources are consecutive, whether the frequency domain resources are consecutive, and whether the reference signal patterns may be obtained by combining those corresponding to the number of ports smaller than 4, 8 or 12.

Furthermore, the reference signal pattern is specific to a particular resource. The resource may an entire bandwidth or a portion of the bandwidth (e.g., one or more sub-bands, one or more PRBs, or one or more RBGs, etc. in the bandwidth). For different particular resources, the reference signal patterns may be different. Alternatively, the reference signal patterns may be the same.

Furthermore, the reference signal pattern may be specific to a sub-frame, a symbol, or a region. For different sub-frames, symbols, or regions, different reference signal patterns may be configured. Alternatively, the same reference signal patterns may be configured. The sub-frame may be at least one of a conventional sub-frame, a multicast broadcast single frequency network (MBSFN) sub-frame, or a self-contained sub-frame. The conventional sub-frame includes at least one of an uplink sub-frame, a downlink sub-frame, or a special sub-frame. The self-contained sub-frame may be one of an uplink-dominant self-contained sub-frame or a downlink-dominant self-contained sub-frame. The region may be at least one of a control region, a data region, or a gap region.

The sub-frame configuration may be understood as an uplink-downlink sub-frame configuration within a period of time. Furthermore, the sub-frame configuration may include at least one of: a fixed sub-frame or a dynamic sub-frame. The fixed sub-frame refers to a sub-frame some positions of which are fixed as uplink or downlink. The dynamic sub-frame refers to a sub-frame whose positions have uncertain uplink and/or downlink transmission attributes which may be dynamically indicated or changed according to conditions.

### Alternative embodiment 2

This embodiment provides a method for designing a reference signal. Here, assuming that a device has acquired reference signal information or performed a transmission in a predetermined sending manner of the reference signal, the device adjusts or changes resource positions and/or patterns of the reference signal or part of the resource positions and/or patterns of the reference signal according to different requirements.

In step one, the device acquires related information of the reference signal. Based on the acquired reference signal information, the device may transmit or receive the reference signal.

The related information of the reference signal includes at least one of the following parameters: a reference signal pattern index, a time domain pattern (index), a time domain symbol index or index set, a period of the time domain pattern, a frequency domain pattern (index), a frequency domain subcarrier index or index set, a period of the frequency domain pattern, a frequency domain starting position (a starting position of a subcarrier/PRB/sub-band), a resource interval within one PRB, a size of a frequency domain resource, a time domain starting position (a starting position of a sub-frame or a starting position of symbols in the sub-frame), a size of a time domain resource, an interval between time domain symbols, a RE position associated with a pattern in a RPB, a symbol position associated with the pattern in a sub-frame/slot, scheduled time domain position information, or scheduled frequency domain resource information.

The reference signal pattern index may be an identifier corresponding to one pattern in a set of time-frequency patterns of the reference signal in one sub-frame or one slot, an identifier corresponding to one basic resource unit in a basic resource unit set of the reference signal in one slot, or an identifier corresponding to one basic resource unit in a basic resource unit set of the reference signal on one or more symbols. The time domain pattern may be one time domain pattern in a set of time domain patterns of the reference signal within one sub-frame or slot. The time domain symbol index or index set may be a symbol position or a symbol position set of the reference signal in the time domain. The period of the time domain pattern may mean that the time domain pattern is repeated once at an interval of certain sub-frames or slots. The frequency domain pattern (index) may be one frequency domain pattern in a set of frequency domain patterns within one PRB/sub-band/RBG/bandwidth/particular frequency domain resource or an index of the one frequency domain pattern. The frequency domain subcarrier index or index set may be a subcarrier position or a set of subcarrier positions of the reference signal within one RPB/sub-band/RBG/bandwidth/particular frequency domain resource. The period of the frequency domain pattern may mean that the frequency domain pattern is repeated once at an interval of certain PRBs/sub-bands/RBGs/bandwidths/particular frequency domain resources.

The reference signal information may be configured through high layer RRC signaling or physical layer DCI signaling, or may be acquired through a predefinition. If the reference signal information is acquired via signaling, the corresponding RRC or DCI signaling certainly includes content for indicating parameters included in the reference signal information.

A configuration of the reference signal information via the RRC signaling may be a static configuration or a semi-static configuration. The static configuration means that a pattern, one configured, is used for sending the reference signal. The semi-static configuration means that a reference signal pattern is configured once over a period of time, and the reference signal pattern in each configuration may be different. The semi-static configuration may be performed periodically, or be triggered according to a particular requirement or event. For example, the configuration of the reference signal pattern is triggered at a periodic point or by the particular event. The newly configured reference signal pattern may be valid before the next configuration or may be valid only on one or more sub-frames, and an original reference signal pattern is still used on other sub-frames. The event may be an interference measurement requirement or a measurement request, that the current sub-frame or slot is a dynamic/flexible sub-frame, that transmission links of neighboring devices have opposite directions, or a CLI scenario.

A configuration of the reference signal information via the DCI signaling may be a dynamic configuration of the reference signal according to a scheduling condition and/or a sub-frame type and/or an information interaction between devices and/or an interference level measured for a long time, and the like.

The RRC signaling and/or the DCI signaling may be shared by a base station and a terminal, or may be specific to the base station, the UE, a particular sub-frame, or a resource.

In step two, the device performs the transmission of the reference signal based on the received reference signal information.

The reference signal information may further include a time domain symbol position of a reference signal for a measurement and/or a region of the reference signal for the measurement and/or the frequency domain pattern index or frequency domain resource position information. For a device with a measurement requirement, an interference measurement is performed at the corresponding symbol position based on this information to acquire an interference level or strength and/or an interference source and/or an interference link direction.

Here, the method in the present invention is described by taking a DMRS as an example. Assuming that information of the DMRS acquired by the device is reference signal pattern index 2 and measurement symbol position 3. A frequency domain pattern corresponding to reference signal pattern index 2 includes subcarrier # 0, subcarrier # 1, subcarrier # 3, subcarrier # 4, subcarrier # 6, subcarrier # 7, subcarrier # 9 and subcarrier # 10, and time domain symbol positions # 0, # 1, # 3, # 6 and # 9. If the base station performing a downlink transmission receives the information, the base station sends the DMRS on the time-frequency resources. In an embodiment, the UE performing a downlink reception also receives the information; if the UE is not notified additionally of time domain and/or frequency domain information of the reference signal for the measurement, the reference signal after a control channel and before a data transmission is defaulted as a measurement reference signal. Based on this, the UE receives and parses the DMRS to determine whether the CLI exists. In an embodiment, a DMRS for measurement in an uplink and a DMRS for measurement in a downlink are located on the same symbol and are multiplexed in a frequency division multiplexing manner. For example, in a downlink the frequency domain pattern on symbol #3 is subcarrier #0, subcarrier #1, subcarrier #3, subcarrier #4, subcarrier #6, subcarrier #7, subcarrier #9, and subcarrier #10, and in an uplink the frequency domain pattern on symbol #3 is subcarriers #2, #5, and #8. In the downlink subcarriers #2, #5, and #8 are not for transmitting, or are for transmitting with zero power, or are vacated. In the uplink, subcarriers #0, subcarrier #1, subcarrier #3, subcarrier #4, subcarrier #6, subcarrier #7, subcarrier #9, and subcarrier #10 are not for transmitting, or are for transmitting with zero power, or are vacated. The UE performing the downlink reception or the base station performing an uplink reception may determine whether the CLI exists by detecting an interference level beyond a preset threshold on subcarriers #2, #5, and #8. Similarly, the UE performing the downlink reception or the base station performing the uplink reception may determine whether the CLI exists by detecting the interference level beyond the preset threshold on sub-carrier #0, sub-carrier #1, sub-carrier #3, sub-carrier #4, sub-carrier #6, sub-carrier #7, sub-carrier #9, and sub-carrier #10. In this case, the measurement reference signal has the same frequency domain pattern as a reference signal on another symbol.

In an implementation manner, the method is also applicable to a case where the measurement reference signal has a different frequency domain pattern from the reference signal on another symbol. It may be seen from this example that patterns of uplink and downlink reference signals are different. Therefore, the patterns of uplink and downlink measurement reference signals cannot be uniformly designed. In order to uniformly design the patterns of the uplink and downlink measurement reference signals, a density of the frequency domain pattern and a basic resource pattern may be designed differently. For example, on a symbol on which the measurement reference signal is sent, the frequency domain pattern may be sub-carriers #0, #1, #6, and #7. The measurement reference signal in another link direction may be sent on sub-carriers #3, #4, #9, and #10. Optionally, the patterns of the uplink and downlink reference signals may be the same, but different cyclic shifts (CSs) may be used. For example, odd CS indexes are used for the uplink and even CS indexes are used for the downlink, or the first N CS indexes are used for the uplink and the following M CS indexes are used for the downlink. Alternatively, CS indexes which start from index A and have an interval of B indexes are used for the uplink, and the rest CS indexes are used for the downlink.

In addition, if the device also receives, besides the reference signal information, the symbol position, and/or frequency domain pattern information, and/or the vacated frequency domain pattern information, and CS information of the reference signal used for the measurement, the device performs the interference measurement and interference link identification according to the preceding information

For another example, the base station uses a CSI-RS as the measurement reference signal, and the UE uses an SRS as the measurement reference signal. If the base station may perform an information interaction after receiving the reference signal information, the base station may learn position information of the measurement reference signal, and the interference measurement and/or the interference level estimation may be performed conveniently. Optionally, an information interaction between devices may not be performed. That is, the base station and/or the UE may perform the interference measurement at their respective measurement reference positions. Here reference signal positions other than the measurement reference signal are not focused. Assuming that the downlink measurement reference signal, the CSI-RS, is located after the control channel, and a gap exists between downlink control and a downlink data transmission, the CSI-RS is sent in the gap, and the uplink measurement reference signal, the SRS, is sent in the gap between downlink control and uplink data. It should be noted that a position of the CSI-RS may be different from or the same as a position of the SRS in the gap. When the position of the CSI-RS is the same as the position of the SRS, a pattern of the CSI-RS is sent in a comb manner in the frequency domain in an embodiment and coexists with the SRS in a frequency division multiplexing mode. When the position of the CSI-RS is different from the position of the SRS, the position of the CSI-RS and the position of the SRS in the gap may be determined according to a predefinition, or the acquired reference signal information, or a DCI indication. Furthermore, the measurement reference signal may also be located at the beginning of a data region or in a region of the control channel. If the measurement reference signal is in the region of the control channel, the UE determines a link direction and/or an interference strength of its subsequent transmission according to information or a pattern of a downlink reference signal received within a control region.

Here, examples are not exhaustively given to describe how the device acquires a position at which the reference signal is sent or received and/or a position of the measurement reference signal based on different reference information parameters.

### Alternative embodiment 3

A difference from embodiment 2 is that a transmission mode of a reference signal or time domain and/or frequency domain positions or patterns of a measurement reference signal may be adjusted.

Assuming that a device has acquired position information of the related reference signal and has not received additional indication information, the device performs a transmission or reception of the reference signal according to the received information.

In manner one, the transmission mode of the reference signal may be adjusted periodically. The transmission mode may be a reference signal pattern corresponding to different requirements, or a reference signal pattern corresponding to the same requirement, or a reference signal pattern corresponding to a scenario with multiple requirements mixed. That is, the transmission mode of the reference signal changes at periodic positions. Which transmission mode is switched to may be determined according to an application scenario, a measurement request, or an interference elimination mechanism.

At the periodic positions, the device performs the sending and reception (measurement) according to a time domain position and/or a frequency domain pattern which are pre-agreed by the base station and the UE/the base station and the base station/the UE and the UE or predefined.

The periodic positions may be determined according to a starting position and a period. In addition, the parameters may be determined through at least one of: the predefinition, RRC signaling, or physical layer DCI signaling. For an interference measurement requirement, the time domain position and/or the frequency domain pattern of the reference signal which are pre-agreed by the base station and the UE/the base station and the base station/the UE and the UE or predefined are a time domain symbol position, the number of time domain symbols occupied, a frequency domain pattern index, a starting position in frequency domain, a size of a frequency domain resource, an interval between frequency domain resources, and a bandwidth/sub-band/PRB/RBG in the frequency domain.

In manner two, time domain and/or frequency domain positions of the reference signal are triggered and/or indicated in an aperiodic manner.

Here, how to determine the time domain and/or frequency domain positions of the reference signal used for the interference measurement is only described. A position of the reference signal under another design requirement or in another scenario may also be determined by the method of the present invention.

In case 1, the frequency domain pattern and/or a symbol position of the reference signal are predefined. According to the received signaling for indicating that the predefined frequency domain pattern and/or the time domain position of the reference signal are valid, the device uses the predefined frequency domain pattern of the reference signal at the predefined time domain position at the first periodic point after the signaling is received.

For example, if the predefined frequency domain pattern of the reference signal within one PRB is subcarriers #0, #1, #6, and #7, and a time domain symbol position is 3 (symbols start from 0), trigger signaling is sent on sub-frame n, and the first periodic point after sub-frame n is sub-frame n+1, it may be known that the device sends the reference signal on symbol 3 and subcarriers #0, #1, #6, and #7 in the sub-frame n+1 according to the frequency domain pattern. The corresponding receiving device also performs the interference measurement and/or a channel estimation and/or channel state information acquisition on symbol 3 according to the frequency domain pattern.

In case 2, the frequency domain pattern and/or the symbol position of the reference signal is predefined. A sub-frame position at which time domain and/or frequency domain patterns of the reference signal are valid is triggered or indicated via the DCI signaling. For example, a field for triggering and/or indicating a reference signal pattern is introduced in DCI. The field occupies n bits and may indicate time domain positions on which the reference signal pattern is used.

In case 3, the frequency domain pattern of the reference signal is predefined. The device determines information on a position at which the frequency domain pattern is valid or the sending or reception is performed according to trigger information received on sub-frame n. Values of an offset and k are carried in the trigger information, and a sub-frame position and a time domain symbol position at which the frequency domain pattern is valid may be determined according to the offset and k. The offset and k are positive integers greater than or equal to 0. In an embodiment, k is 0, 1, 2, 3, 4, 5, 6, 7, 8, 9, 10, or the like, and the offset is at least one of 0, 1, 2, 3, 4, 5, 6, 7, 8, 9, 10, 11, or the like. A maximum value of the offset is the number of symbols included in one symbol or one slot.

In case 4, the frequency domain pattern of the reference signal is predefined. The frequency domain pattern of the reference signal is used on which time domain sub-frame and which symbol in the sub-frame may be notified via the DCI signaling for triggering and/or indicating the frequency domain pattern of the reference signal to be enabled.

In case 5, the DCI signaling triggers the measurement to be performed and/or indicates the time domain position and/or the frequency domain position of the reference signal. That is, the DCI signaling carries a measurement trigger indication message, and/or explicitly indicates the time domain position and/or a time domain symbol and/or the frequency domain pattern index and/or the starting position in the frequency domain and/or the interval between frequency domain resource and/or the size of the frequency domain resource of the measurement reference signal.

In case 6, the device has acquired a set of time domain patterns and/or frequency domain patterns of the reference signal, and one time domain pattern and/or frequency domain pattern is triggered and/or indicated in the DCI. If a time domain position of the time domain pattern and/or the frequency domain pattern is not indicated, the time domain position may be the first uplink/downlink sub-frame or a dynamic sub-frame after indication signaling is received.

When time domain and/or frequency domain resource positions of the reference signal conflict with those of a reference signal in the existing LTE, the conflict may be handled in one of the following manners: the reference signal here keeps away from the reference signal in the LTE technology, or the reference signal here uses time domain and/or frequency domain resource positions which are not used by the reference signal in the LTE technology. In a scenario where NR coexists with the LTE, when the reference signal in the present invention is designed, the time domain and/or frequency domain patterns of the reference signal may be configured or designed as much as possible to avoid the time domain and/or frequency domain positions of the reference signal in the LTE. In a scenario where the NR does not coexist with the LTE, only the scenario and design requirements need to be considered.

Some typical examples in which the antecedent reference signal is designed are given in the embodiments described below. The antecedent reference signal may be used for implementing at least one of the following functions: the interference measurement, the link direction identification, the interference source identification, the (control channel and/or data channel) demodulation, the channel state acquisition, the channel estimation, the beam tracking, the beam management, and other functions implementable by the reference signal.

### Alternative embodiment 4

This embodiment provides a reference signal design in which one time domain symbol is occupied and one frequency domain subcarrier/RE is occupied (for example, (X, Y) = (1, 1)).

Assuming that the reference signal of the present invention is designed by referring to a pattern of a CRS, a time domain resource (also called a time domain pattern) and a frequency domain resource (also called a frequency domain pattern) of the reference signal may be a subset or a superset of time domain resources and/or frequency domain resources of the CRS. For a single port, a resource position of the CRS on one symbol and in one PRB is 0 and 6. The resource position is denoted by K, where K is 10, 6}. FIG. 5 is a schematic diagram of a time-frequency resource position of a CRS for an existing single port. As shown in FIG. 5, a RE in the gray part is a time-frequency resource corresponding to one antenna port (for the CRS, port p is 0).

For NR, since no CRS is introduced, PDCCH demodulation will be affected to some extent. Based on this, the reference signal designed in the present invention may be used for an interference estimation in addition to the PDCCH demodulation and/or channel state information acquisition. The interference estimation may be estimating an interference strength and/or identifying an interference source link direction and/or identifying strong/weak interference sources. Furthermore, the reference signal may be at a front position as much as possible, i.e., the position of the reference signal is moved forwards.

The frequency domain pattern of the reference signal occupying one frequency domain subcarrier/RE will be described in detail below.

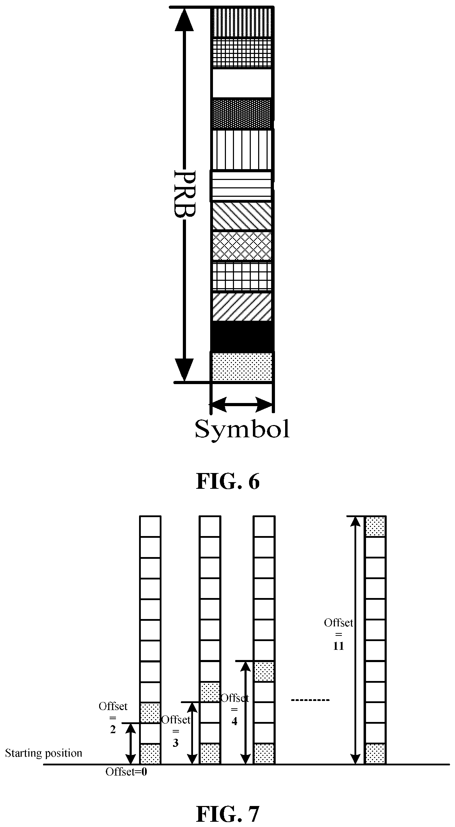

One PRB includes 12 subcarriers/resource elements (REs). Based on this, a frequency domain position K of the reference signal may be one of 0, 1, 2, 3, 4, 5, 6, 7, 8, 9, 10, and 11. FIG. 6 is a schematic diagram of a reference signal occupying one time domain symbol and only one frequency domain subcarrier/RE in one PRB in this embodiment. As shown in FIG. 6, a RE in the gray part to a RE in the bold black vertical bar part sequentially correspond to one frequency domain resource position of reference signal.

Assuming that one subcarrier/RE corresponds to one antenna port, 12 devices may be multiplexed in one PRB in a frequency division multiplexing mode. In addition, a cyclic shift (CS) may be introduced to multiplex different devices on one subcarrier/RE resource through CSs. The number of CSs is denoted by N, where N is a positive integer greater than or equal to 1. In an embodiment, N is 1, 2, 3, 4, 5, 6, 7, 8, 9, 10, 11, 12, 13, 14, 15, 16, 17, 18, 19, 20, 21, 22, 23, 24, etc.. Furthermore, the frequency division multiplexing mode and the CS may be combined to implement multiplexing among more devices.

### Alternative embodiment 5

This embodiment provides a reference signal design in which one time domain symbol is occupied and two frequency domain subcarriers/REs are occupied (for example, (X, Y) = (2, 1)).

For the two subcarriers/REs occupied in one PRB, the two subcarriers/REs may be adjacent or not adjacent in frequency domain

In the first case, reference signals are not adjacent in the frequency domain.

In this case, one PRB includes 12 subcarriers or resource elements (REs), and frequency domain positions K of the reference signal may be any two inconsecutive resources among 0, 1, 2, 3, 4, 5, 6, 7, 8, 9, 10, and 11.

A frequency domain resource position of the reference signal may be determined by parameters including a starting position and/or an offset and/or a spacing.

Here, starting position 0 is taken as an example to illustrate the frequency domain resource position of the reference signal. FIG. 7 is a schematic diagram of a resource position of a reference signal within one PRB in frequency domain on one symbol according to an embodiment of the present invention. As shown in FIG. 7, REs in gray parts are the frequency domain positions of the reference signal. Furthermore, the starting position of the reference signal in FIG. 7 is 0, a frequency domain interval is 1, 2, 3, ..., and 10 from left to right, and an frequency domain offset is 2, 3, 4, 5, ..., and 11 from left to right.

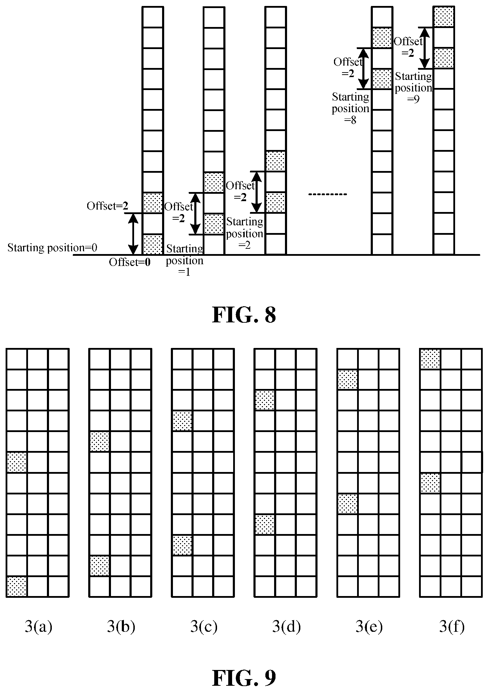

Furthermore, based on any one of frequency domain resource patterns in FIG. 7, the starting position/offset of the reference signal within one PRB may be one of 1, 2, 3, 4, 5, 6, ..., and 11 in addition to 0. In practice, for each offset in FIG. 7, different frequency domain patterns may be obtained by setting different starting positions. FIG. 8 is a schematic diagram illustrating that a fixed offset between frequency domain resources is 2, and the starting position of the frequency domain resources is sequentially shifted from lower to higher in frequency domain in an embodiment of the present invention. According to the same method, when the offset between frequency domain resources is sequentially 3, 4, 5, 6, 7, 8, 9, 10, and 11, different frequency domain patterns of the reference signal may be obtained according to different frequency domain starting positions. Their schematic diagrams are not given one by one here.

For another example, FIG. 9 is a schematic diagram illustrating that a fixed offset between frequency domain resources is 6, and the starting position of the frequency domain resources is sequentially shifted from lower to higher in frequency domain according to an optional embodiment of the present invention. As shown in FIG. 9, REs in the gray parts in 3(a) to 3(f) are separately time-frequency resources corresponding to the frequency domain offsets of the reference signal which are sequentially 0 to 5 in the present invention.

Assuming that resource positions of two subcarriers/REs correspond to one antenna port, devices perform multiplexing in one PRB in a frequency division multiplexing mode. For different devices (for example, different antenna ports are used by different devices), the frequency domain resource positions or frequency domain resource patterns for the different devices may be determined according to the antenna ports or intervals or offsets between resource positions corresponding to the antenna ports. In an example in which a first antenna port occupies resources corresponding to subcarriers/REs 0 and 6 in the frequency domain, assuming that an interval or an offset between resources corresponding to the starting positions of the frequency domain resources (for example, it is assumed that the starting position in the frequency domain always starts from a lower frequency domain resource among frequency domain resources) is 3, the frequency domain positions of a second antenna port may be determined to be 3 and 9. For a reference signal corresponding to 4 antenna ports, two REs in the frequency domain corresponding to a third antenna port or a fourth antenna port may be one of REs 1 and 7, or REs 2 and 8, or REs 4 and 10, or REs 5 and 11. Optionally, the frequency division multiplexing mode should be used for the frequency domain resources corresponding to different antenna ports. If frequency domain orthogonal covering code (OCC) is supported between discrete REs in the frequency domain, 2, 4, 8, or 12 ports may be multiplexed on two REs. For example, multiple antenna ports may be multiplexed on two REs by means of a CS and the frequency domain OCC, e.g., how the CS and the OCC are implemented.

In the second case, the reference signals are adjacent in the frequency domain.

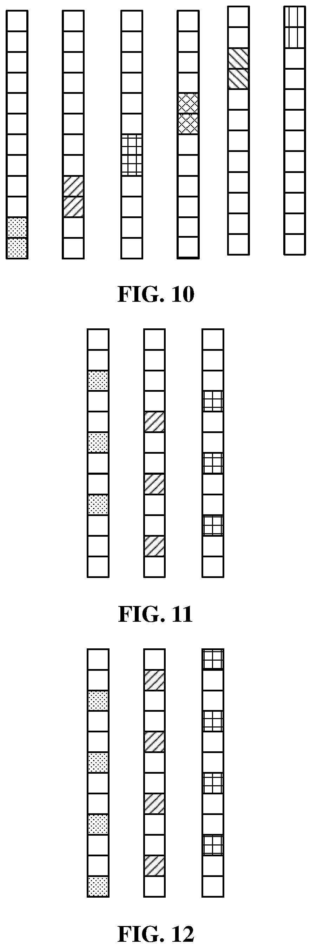

In this case, one PRB includes 12 subcarriers or resource elements (REs), and the frequency domain resource positions K of the reference signal may be any two consecutive resources among 0, 1, 2, 3, 4, 5, 6, 7, 8, 9, 10, and 11. FIG. 10 is a schematic diagram of frequency domain patterns of a reference signal including two consecutive REs corresponding to different frequency domain offsets/start positions according to an embodiment of the present invention. As shown in FIG. 10, resources corresponding to REs in a dark gray part are the frequency domain pattern of the reference signal, and FIG. 10 sequentially shows the frequency domain patterns from left to right when the offset/starting position in the frequency domain is shifted from lower to higher. Assuming that the resource positions of the two consecutive subcarriers/REs correspond to one antenna port, the devices perform multiplexing in one PRB in the frequency division multiplexing mode. For different devices (for example, different antenna ports are used by the different devices), the frequency domain resource positions or the frequency domain resource patterns for the different devices may be determined according to the different antenna ports or intervals or offsets between resource positions corresponding to the different antenna ports. In an example in which the first antenna port occupies subcarriers/REs 0 and 1 in the frequency domain, 6 antenna ports or devices may be multiplexed in one PRB in the frequency division multiplexing mode on 12 subcarriers/REs. The practical number of antenna ports is 1, 2, 4, 8, 12, or the like. 4 antenna ports or devices may be multiplexed in the frequency division multiplexing mode, for example, the second, third, or fourth antenna port or device may occupy one of subcarriers/REs 2 and 3, or subcarriers/REs 4 and 5, or subcarriers/REs 6 and 7, or subcarriers/REs 8 and 9, or subcarriers/REs 10 and 11 in the frequency domain. If one antenna port or device uses or occupies one frequency domain resource position or pattern, the frequency domain resource position or pattern may not be used by another antenna port. Furthermore, an increase of the number of antenna ports supported on one symbol may be implemented by combining frequency division, code division (which refers to the frequency domain OCC in this embodiment) and the CS in any way.

### Alternative embodiment 6

This embodiment provides a reference signal design in which one time domain symbol is occupied and three frequency domain subcarriers/REs are occupied (for example, (X, Y) = (3, 1)).

For three subcarriers/REs occupied in one PRB, the three subcarriers/REs may be consecutive or inconsecutive in frequency domain.

In the case of inconsecutive REs in the frequency domain, a reference signal pattern is determined according to a frequency domain starting position/offset and an interval between REs in the same manner in embodiment 2. The intervals between REs may be equal or not equal. Only patterns for the equal interval between REs in the frequency domain are described here, and patterns for the unequal intervals are not listed and described one by one here because the methods are the same. FIG. 11 is a schematic diagram of resource positions of a reference signal corresponding to a frequency domain starting position or offset of 3 and an interval of 3 according to an embodiment of the present invention. As shown in FIG. 11, REs in the gray parts are frequency domain positions of the reference signal, e.g., 3, 6, and 9. If the reference signal pattern corresponds to one antenna port, multiple antenna ports may be multiplexed in a frequency division multiplexing mode and/or a code division multiplexing mode and/or a cyclic shift mode. For example, assuming that a first antenna port corresponds to 3, 6, and 9, and the frequency division multiplexing mode is used for the antenna ports, a second antenna port corresponds to frequency domain resource positions 1, 4 and 7, or positions 2, 5 and 8, or positions 4, 7 and 10, or positions 5, 8 and 11. In the case of consecutive REs in the frequency domain, the frequency domain pattern may be determined according to an offset/starting position and a length of the consecutive REs. Optionally, the 3 REs cannot correspond to more than 2 antenna ports, and thus the patterns for the three consecutive REs may only correspond to one antenna port. However, multiple antenna ports may be implemented in the frequency division multiplexing mode. For example, if the first antenna port corresponds to 0, 1 and 2, a starting position of frequency domain positions for the second antenna port may be determined according to an offset from the lowest frequency domain resource position or the highest frequency domain resource position for the first antenna port. The offset is certainly greater than a consecutive length or the number of occupied frequency domain resources for the first antenna port. For example, the second antenna port may correspond to 3, 4 and 5, or 5, 6 and 7, or 6, 7 and 8, or 7, 8 and 9, or 8, 9 and 10, or 9, 10 and 11.

### Alternative embodiment 7

This embodiment provides a reference signal design in which one time domain symbol is occupied and four frequency domain subcarriers/REs are occupied (for example, (X, Y) = (4, 1)).

For four subcarriers/REs occupied in one PRB, the four subcarriers/REs may be consecutive or inconsecutive in frequency domain. Frequency domain resource positions of a reference signal may be determined according to at least one of the following parameters: a starting position/offset, an interval, a period, or the number of consecutive resources.

In the case of inconsecutive subcarriers/REs in the frequency domain, (a1) if frequency domain resources are at equal intervals and an interval between frequency domain resources is 3, the corresponding frequency domain resource positions are 0, 3, 6 and 9, or 1, 4, 7 and 10, or 2, 5, 8 and 11, as shown in FIG. 12.

If the interval between frequency domain resources is 2, the corresponding frequency domain resource positions are 0, 2, 4 and 6, or 1, 3, 5 and 7, or 2, 4, 6 and 8, or 3, 5, 7 and 9, or 4, 6, 8 and 10, or 5, 7, 9 and 11. (a2) In the case of unequal intervals in the frequency domain, the frequency domain resource positions are 0, 2, 9 and 11, or 1, 3, 8 and 10, or 2, 4, 7 and 9, or the like, which are not listed one by one here.

In the case of consecutive subcarriers/REs in the frequency domain, the frequency domain resource positions of the reference signal may be 0, 1, 2 and 3, or 1, 2, 3 and 4, or 2, 3, 4 and 5, or 3, 4, 5 and 6, or 4, 5, 6 and 7, or 5, 6, 7 and 8, or 6, 7, 8 and 9, or 7, 8, 9 and 10, or 8, 9, 10 and 11. Here, one antenna port or one device may correspond to a pattern of consecutive resources. In this case, different devices may be multiplexed in the frequency division mode. Alternatively, if different devices use the same antenna port or resource, the CS mode may be used. If each subcarrier/RE corresponds to one antenna port or device, the pattern implements a number of devices or ports corresponding to a number of occupied frequency domain resources in the pattern. Furthermore, multiplexing may be implemented in the CS mode on the resource corresponding to one subcarrier/RE, so that the number of multiplexed antenna ports is further increased.

In the case where consecutive subcarriers/REs coexist with inconsecutive subcarriers/REs in the frequency domain, the frequency domain pattern may include two (2, 1) patterns or include a (1, 1) pattern and a (3, 1) pattern. Here, REs in the two (2, 1) patterns may be a combination of consecutive subcarriers/REs and inconsecutive subcarriers/REs, or a combination of consecutive subcarriers/REs and consecutive subcarriers/REs. The frequency domain pattern of the reference signal composed of the two (2, 1) patterns is one of: 0, 1, 3 and 4, or 0, 1, 4 and 5, or 0, 1, 5 and 6, or 0, 1, 6 and 7, or 0, 1, 7 and 8, or 0, 1, 8 and 9, or 0, 1, 9 and 10, or 0, 1, 10 and 11.

Different devices may be multiplexed in the frequency division multiplexing mode, or through the frequency domain OCC of length 4, or through a pattern formed by combining the frequency division and the CS, or a pattern formed by combining the frequency division and the OCC, or through the pattern formed by combining the frequency division and the CS.

### Alternative embodiment 8

This embodiment provides a reference signal design in which one time domain symbol is occupied and eight frequency domain subcarriers/REs are occupied (for example, (X, Y) = (8, 1)).

For eight subcarriers/REs occupied in one PRB, the eight subcarriers/REs may be consecutive or inconsecutive in frequency domain. Frequency domain resource positions of a reference signal may be determined according to at least one of the following parameters: a starting position/offset, an interval, a period, or the number of consecutive resources.

In the case of consecutive subcarriers/REs in the frequency domain, the frequency domain resource positions are one of: 0, 1, 2, 3, 4, 5, 6 and 7, or 1, 2, 3, 4, 5, 6, 7 and 8, or 2, 3, 4, 5, 6, 7, 8 and 9, or 3, 4, 5, 6, 7, 8, 9 and 10, or 4, 5, 6, 7, 8, 9, 10 and 11.

In the case of inconsecutive subcarriers/REs in the frequency domain, a frequency domain resource pattern may be obtained from (1, 1), (2, 1), (3, 1), or (4, 1) patterns.

A method for designing a reference signal occupying 12 frequency domain subcarriers/REs is the same as the preceding methods, which is not described again here.

All the embodiments described above provide methods for designing the reference signal on one symbol, to perform an interference measurement, quickly acquire a channel state, and reduce a demodulation delay of a control channel or a data channel. Methods for designing a reference signal in different regions will be described separately below. The methods may be combined with each other in any way.

### Alternative embodiment 9

This embodiment provides a method for designing a reference signal in a control region. The control region occupies different numbers of symbols, which also affects a design of the reference signal to some extent, for example, a time domain position of the reference signal, a time domain pattern of the reference signal, a frequency domain pattern of the reference signal, and a frequency domain position of the reference signal. Any one of the reference signal patterns described in embodiments 1 to 5 may be used in this embodiment. However, this embodiment is not limited to the patterns in the above-mentioned embodiments.

Here, the preset number of symbols is used for the design. For example, the reference signal is designed according to a maximum number of PDCCH symbols, for example, a maximum number of symbols is 3.

In case one, a reference signal occupying one symbol in a region of a control channel is designed.

For convenience, only a few typical designs of the reference signal occupying one time domain symbol in the region of the control channel are listed here.

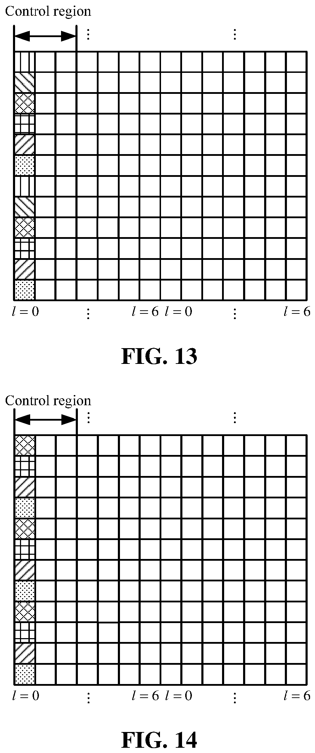

Typical example 1: FIG. 13 is schematic diagram 1 of a frequency domain pattern of a reference signal occupying one symbol in a control channel according to this embodiment. Here, k denotes a subcarrier index or identity within one PRB. RE resources corresponding to k of 0 and 6 constitute a frequency domain pattern of the reference signal. Based on this, different frequency domain patterns of the reference signal may be obtained by setting different frequency domain offsets. For example, a reference signal pattern corresponding to k of 0 and 6 is used as reference, that is, the frequency domain offset is 0. When the offset increases, for example, the offset is 1, 2, 3, 4, or 5, the corresponding frequency domain patterns of the reference signal are sequentially k of 1 and 7, k of 2 and 8, k of 3 and 9, k of 4 and 10, or k of 5 and 11. Furthermore, if one of the patterns is time-frequency resources corresponding to one port, ports may be multiplexed in at least one of manners described below.

Manner one is a frequency division multiplexing manner. For example, if frequency domain resources corresponding to port A are k of 0 and 6, and the ports are multiplexed in the frequency division multiplexing mode, frequency domain resources corresponding to port B are k of 1 and 7, frequency domain resources corresponding to port C are k of 2 and 8, frequency domain resources corresponding to port D are k of 3 and 9, frequency domain resources corresponding to port E are k of 4 and 10, and frequency domain resources corresponding to port F are k of 5 and 11.

Manner two is a combination of the frequency division multiplexing manner and a CS manner. Based on the multiplexing manner in manner one, in order to multiplex more ports, more ports may be multiplexed in the CS manner on resources corresponding to one frequency domain pattern. Here, based on the number of ports multiplexed in manner one, the number of ports that can be further multiplexed depends on the number of available CSs.

Manner three is a combination of the frequency division multiplexing manner and an OCC manner. Based on the multiplexing manner in manner one, in order to multiplex more ports, more ports may be multiplexed through a frequency domain OCC on resources corresponding to one frequency domain pattern. Unlike an OCC in the existing art which can support only an OCC between consecutive resources in the frequency domain or the time domain, the OCC in the present invention further supports an OCC between inconsecutive resources in the frequency domain or the time domain in addition to the meaning in the existing art.

Typical example 2: FIG. 14 is schematic diagram 2 of a frequency domain pattern of a reference signal occupying one symbol in a control channel according to this embodiment. As shown in FIG. 14, k of 0, 4 and 8 corresponds to one frequency domain pattern. Similarly, different frequency domain patterns are obtained by setting different frequency domain offsets based on the frequency domain pattern corresponding to k of 0, 4 and 8. For example, a frequency domain pattern corresponding to an offset of 1 (the offset starts from 0) is 1, 5 and 9. A frequency domain pattern corresponding to an offset of 2 (the offset starts from 0) is 2, 6 and 10. A frequency domain patterns corresponding to an offset of 3 (the offset starts from 0) are 3, 7 and 11.

Assuming that the frequency domain pattern corresponds to one port, different ports may be multiplexed in at least one of manners described below.

Manner one is the frequency division multiplexing manner. For example, if the frequency domain resources corresponding to port A are k of 0, 4 and 8, and the ports are multiplexed in the frequency division multiplexing manner, the frequency domain resources corresponding to port B are k of 1, 5 and 9, the frequency domain resources corresponding to port C are k of 2, 6 and 10, the frequency domain resources corresponding to port D are k of 3, 7 and 11. Four ports may be multiplexed on one symbol in this manner.

Manner two is the combination of the frequency division multiplexing manner and the CS manner. Based on the multiplexing manner in manner one, in order to multiplex more ports, more ports may be multiplexed in the CS manner on resources corresponding to one frequency domain pattern. Here, based on the number of ports multiplexed in manner one, the number of ports that can be further multiplexed depends on the number of available CSs.

Manner three is the combination of the frequency division multiplexing manner and the OCC manner. Based on the multiplexing manner in manner one, in order to multiplex more ports, more ports may be multiplexed through the frequency domain OCC on resources corresponding to one frequency domain pattern. Unlike the OCC in the existing art which can support only the OCC between consecutive resources in the frequency domain or the time domain, the OCC in the present invention further supports the OCC between inconsecutive resources in the frequency domain or the time domain in addition to the meaning in the existing art.

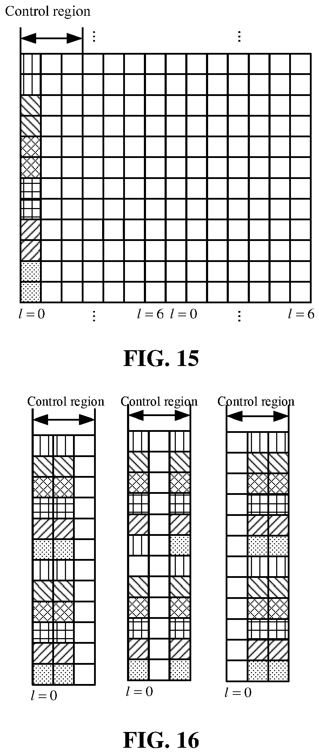

Typical example 3: FIG. 15 is schematic diagram 3 of a frequency domain pattern of a reference signal occupying one symbol in a control channel according to this embodiment. As shown in FIG. 15, k of 0 and 1 corresponds to one frequency domain pattern. Similarly, different frequency domain patterns are obtained by setting different frequency domain offsets based on the frequency domain pattern corresponding to k of 0 and 1 (it should be noted that the offset here is a multiple of 2, i.e., the offset is a multiple of the number of consecutive subcarriers). For example, the frequency domain pattern corresponding to the offset of 2 (the offset starts from 0) is 2 and 3. A frequency domain pattern corresponding to an offset of 4 (the offset starts from 0) is 4 and 5. A frequency domain pattern corresponding to an offset of 6 (the offset starts from 0) is 6 and 7. A frequency domain pattern corresponding to an offset of 8 (the offset starts from 0) is 8 and 9. A frequency domain pattern corresponding to an offset of 10 (the offset starts from 0) is 10 and 11. Assuming that the frequency domain pattern corresponds to one port, the ports may be multiplexed in at least one of the frequency division multiplexing manner, the OCC manner, or the CS manner. Similarly, at least one of the preceding frequency domain patterns may correspond to one port, and the multiplexing manners are the same as the preceding multiplexing manners. The pattern may be consecutive or discrete in the frequency domain.

Here, only the frequency domain patterns of the reference signal at the first symbol position in the control channel region are illustrated. The frequency domain patterns at other positions (e.g., symbol 2 and symbol 3) in the control region are the same as the frequency domain patterns exemplified here, except that time domain symbol positions are different. In addition, for one frequency domain pattern, an interval between resources in the pattern may be determined according to a period or an interval or the frequency domain offset, and a first resource in the one frequency domain pattern may be indicated or determined according to the starting position.

In case two, a reference signal occupying two symbols in the region of the control channel is designed.

In the case where the reference signal occupies two symbols in the control region, a pattern on the latter symbol may be the same as that on the former symbol in the frequency domain, or may have an offset in the frequency domain. Optionally, resources on different symbols may correspond to one port, or may correspond to different ports. Here, a design of the reference signal patterns on two symbols is described with the typical examples in case one.

A1. Frequency domain patterns on two symbols are the same.

FIG. 16 is schematic diagram 1 of resource positions of frequency domain patterns on two symbols according to an embodiment of the present invention.

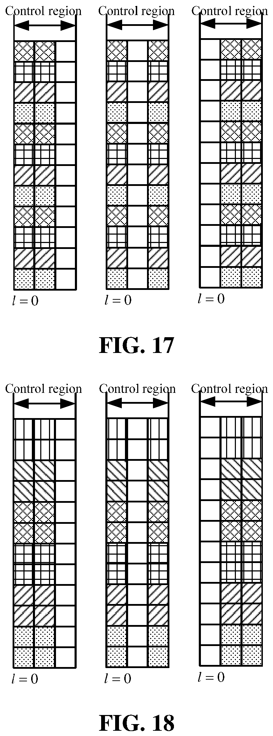

FIG. 17 is schematic diagram 2 of resource positions of frequency domain patterns on two symbols according to an embodiment of the present invention.

FIG. 18 is schematic diagram 3 of resource positions of frequency domain patterns on two symbols according to an embodiment of the present invention.

Differences between three diagrams in FIG. 16 to FIG. 18 are that time domain positions occupied by the reference signal are different. In FIG. 16-FIG. 18, a first diagram is a schematic diagram in which the reference signal occupies the first symbol and the second symbol in the time domain; a second diagram is a schematic diagram in which the reference signal occupies the first symbol and the third symbol in the time domain; and a third diagram is a schematic diagram in which the reference signal occupies the second symbol and the third symbol in the time domain. Furthermore, the illustrative frequency domain patterns on the two symbols may be understood from two perspectives: firstly, resources with the same identifier on one symbol correspond to one port and resources with the same identifier on different symbols correspond to different ports; secondly, resources with the same identifier on two symbols correspond to one port or one port group. Ports in the same port group are multiplexed through a time domain OCC and/or the CS and/or frequency division.

A2. The frequency domain patterns on two symbols are different.

The different frequency domain patterns described herein may be understood as frequency domain patterns with different frequency domain resource densities and/or the same frequency domain pattern with different frequency domain positions. An advantage of the different frequency domain patterns on different symbols is that different reference signal patterns may be configured for different links according to different time domain positions for identifying an interference link direction and/or an interference source. Examples are not exhaustively listed here. Only a simple diagram is given to illustrate the case where the frequency domain patterns on different symbols are different.

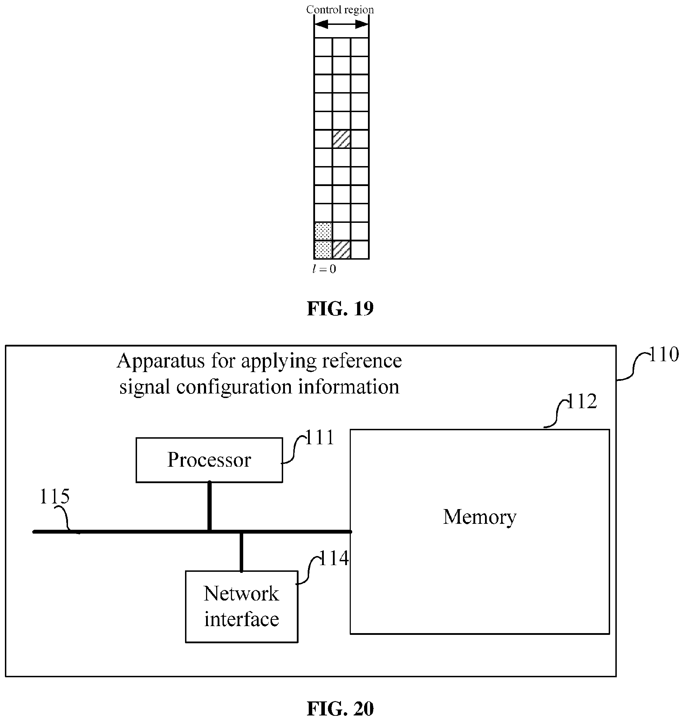

FIG. 19 is a schematic diagram of resource positions of different frequency domain patterns on two symbols according to an embodiment of the present invention.

In case three, a reference signal occupying three symbols in the region of the control channel is designed.

A design idea in case three is the same as that in case two. A difference may be that frequency domain patterns on the three symbols may be different, and/or frequency domain patterns on two symbols (the two symbols may be adjacent symbols or discrete symbols) are the same and different from a frequency domain pattern on another symbol. Furthermore, densities of frequency domain patterns on some symbols may be different from that on another symbol.

### Alternative embodiment 10

This embodiment provides a reference signal configuration manner.

Firstly, reference signal configuration information is acquired.

The reference signal configuration information includes at least one of: a sub-frame position of a reference signal, a symbol position of the reference signal, the number of symbols of the reference signal, a frequency domain starting position of the reference signal, the number of frequency domain resources of the reference signal, a pattern of the reference signal, a measurement request, a port/beam corresponding to the reference signal and/or the pattern, a period/interval, a sending time window of the reference signal (e.g., a starting position and a duration of the time window), a sub-frame position at which the reference signal is sent within the time window, a symbol position on a reference sub-frame within the time window, a frequency domain bandwidth, a sequence, numerology (e.g., a subcarrier spacing and a CP), transmit power.

The time window may be configured before or after a position of the reference signal or include the position of the reference signal. At the position of the reference signal within the time window, a device may send or measure the reference signal, or send or measure one or more reference signals within the time window when triggered or indicated by DCI, and/or a position at which the device sends the reference signal within the time window is triggered and/or indicated by the DCI.

The frequency domain resources may be one of a PRB, a RE, a sub-band, an RBG, or a REG. The pattern of the reference signal may refer to a time domain pattern and/or a frequency domain pattern. The period/interval is applicable to the time domain and/or the frequency domain.

At least one of the reference signal configuration information may be acquired by the device through at least one of: high layer radio resource control (RRC) signaling, physical layer downlink control information (DCI) signaling, a pre-agreement between devices or a pre-definition. The pre-agreement between devices may be performed by a base station and/or a terminal.

In an implementation manner, neighboring devices may exchange the reference signal configuration information. The method here is applicable to the same link, different links, the same type of device, different types of device and any device which may interact with another. For example, on a base station side, a first base station or a first base station group performs a downlink transmission, and a neighboring second base station or second base station group perform an uplink reception. Based on this, the first base station or the first base station group may notify the neighboring second base station or second base station group of reference signal configuration information of a local cell. Additionally, the first base station or the first base station group may also notify a terminal or a terminal group in the neighboring second base station or second base station group of the reference signal configuration information of the local cell. Operations performed by the first base station or the first base station group are also applicable to the second base station or the second base station group. In addition to that one base station or one base station group notify a neighboring base station, a neighboring base station group, a terminal, or a terminal group of the reference signal configuration information, the devices (the base station and/or the terminal) may send their respective configuration information to each other. On a terminal side, a terminal performing a downlink reception receives reference signal information sent by the base station side (the reference signal information includes reference signal information of the local cell, and optionally includes reference signal information of a neighboring cell). A terminal performing an uplink transmission sends the reference signal according to the configured reference signal. The terminal may also send its own reference signal information to a neighboring terminal and/or base station, so that the neighboring terminal and/or base station may perform at least one of the following operations: an measurement, vacating part or all of resources corresponding to the reference signal of the neighboring device, adjusting a transmitted or a received beam, adjusting a transmission or scheduling policy, adjusting transmission power, or informing an adjusted power factor/value.

In an implementation manner, the device performs the measurement based on the received reference signal configuration information. The terminal side reports a measurement result and/or the corresponding measurement resource information to a serving base station and/or the neighboring base station.

### Embodiment 4

An embodiment of the present invention further provides a storage medium. Optionally, in this embodiment, the storage medium may be configured to store program codes for executing the power supply method according to embodiment 1.

In this embodiment, the storage medium may be located in any one computer terminal in a computer terminal group in a computer network, or in any one mobile terminal in a mobile terminal group.

In this embodiment, the storage medium is configured to store program codes for performing steps described below.

In S 1, a main power supply circuit is connected to an auxiliary power supply circuit through a control circuit.

In S2, a power supply voltage provided by the main power supply circuit and/or the auxiliary power supply circuit is received through the control circuit.

In the several embodiments provided in the present application, it should be understood that the technical content disclosed in the present application may be implemented in other ways. The apparatus embodiments described above are only illustrative. For example, the unit division is only a logical function division, and in practice, the unit division may be implemented in other ways. For example, multiple units or components may be combined or integrated into another system, or some features may be omitted or not performed. In addition, the presented or discussed mutual coupling, direct coupling or communication connections may be indirect coupling or communication connections via interfaces, units or modules, or may be electrical or in other forms.

The units described above as separate components may or may not be physically separated. Components presented as units may or may not be physical units, i.e., may be located in one place or may be distributed on multiple network units. Part or all of these units may be selected according to practical requirements to achieve the objects of the solutions in the embodiments of the present invention.

Additionally, various functional units in each embodiment of the present invention may be integrated into one processing unit, or each unit may be physically presented separately, or two or more units may be integrated into one unit. The integrated unit may be implemented by hardware or a software function unit.

The integrated unit may be stored in a computer-readable storage medium if implemented in the form of the software function unit and sold or used as an independent product. Based on this understanding, the solutions provided by the present invention substantially, or the part contributing to the existing art, may be embodied in the form of a software product. The computer software product is stored in a storage medium and includes several instructions for enabling a computer device (which may be a personal computer, a server, a network device or the like) to execute all or part of the steps in the methods provided by the embodiments of the present invention. The preceding storage medium includes: a USB flash drive, a read-only memory (ROM), a random access memory (RAM), a mobile hard disk, a magnetic disk, an optical disk or another medium capable of storing program codes.

If the integrated unit is implemented in a form of a hardware structure, an embodiment of the present invention further provides an apparatus for applying reference signal configuration information. FIG. 20 is a structural diagram of hardware of an apparatus for applying reference signal configuration information. As shown in FIG. 20, the apparatus 110 for applying reference signal configuration information includes at least one processor 111, a memory 112, and at least one network interface 114. Various components of the apparatus 110 for applying reference signal configuration information are coupled together by a bus system 115. It may be understood that the bus system 115 is configured to implement connections and communications between these components. The bus system 115 includes a power bus, a control bus, and a state signal bus in addition to a data bus. For clarity of description, however, the various buses are labeled as the bus system 115 in FIG. 20.

The above are only alternative embodiments of the present invention and are not intended to limit the present invention. For those skilled in the art, various modifications and changes may be made to the present invention. Any modifications, equivalent substitutions and improvements should fall within the scope of the present invention, as defined by the appended claims.

### INDUSTRIAL APPLICABILITY

In embodiments of the present invention, a base station or a terminal acquires reference signal configuration information, where the reference signal configuration information includes at least one of: reference signal configuration information of a local cell, reference signal configuration information of a neighboring cell, or reference signal configuration information of a terminal in the neighboring cell; and the base station or the terminal performs a transmission or a measurement according to the acquired reference signal configuration information. In this way, the base station or the terminal may measure a link which is likely to cause interference in the neighboring cell while measuring a link in the local cell, so that CLI can be estimated and identified, and CLI between neighboring cells is effectively avoided.

## Claims

1. A method for applying reference signal configuration information, **characterized by**:
acquiring (S 101), by a base station, the reference signal configuration information, wherein the reference signal configuration information comprises at least one of: reference signal configuration information of a local cell, reference signal configuration information of a neighboring cell, or reference signal configuration information of a terminal in the neighboring cell; and
performing (S103), by the base station a transmission or a measurement according to the acquired reference signal configuration information;
wherein the base station receives a measurement result and/or a corresponding measurement resource information reported by the terminal after the terminal performs a measurement based on received reference signal configuration information.

2. The method of claim 1, further comprising:
sending, by the base station, the reference signal configuration information of the local cell and/or reference signal configuration information of a terminal in the local cell to a neighboring base station or a terminal in the neighboring base station.

3. The method of claim 1, wherein the reference signal configuration information comprises at least one of: a type or a type set of a reference signal, resource information of the reference signal, a sequence, a subcarrier spacing, power, or a measurement request indication;
wherein the type or the type set of the reference signal comprises at least one of: a zero power reference signal or a non-zero power reference signal; or wherein the resource information of the reference signal comprises at least one of: a starting position of a time domain resource, an interval between time domain resources or a period of time domain resources, a symbol position, a symbol position set, a time domain pattern, time domain time window information, a starting position of a frequency domain resource, a size of the frequency domain resource, an interval between frequency domain resources or a period of frequency domain resources, a frequency domain pattern, an index of a correspondence between a symbol and the frequency domain pattern, a port index, a beam index, or a basic time-frequency pattern or pattern index.

4. The method of claim 3, wherein the time domain time window information comprises at least one of: a starting position of a time window, a length of the time window, a starting resource position of the reference signal within the time window, or an interval between reference signal resources within the time window;
wherein the base station performs the transmission or the measurement of the reference signal on at least one of the reference signal resources within the time window.

5. The method of any one of claims 1 to 4, wherein the base station acquires the reference signal configuration information through at least one of:
high layer radio resource control, RRC, signaling;
physical layer downlink control information, DCI, signaling;
a pre-agreement between devices, or
a predefinition.

6. The method of claim 1, wherein performing, by the base station, the transmission according to the acquired reference signal configuration information comprises: periodically sending, by the base station, a reference signal according to the acquired reference signal configuration information; or aperiodically sending, by the base station, a reference signal according to the acquired reference signal configuration information;
wherein aperiodically sending, by the base station, the reference signal comprises: acquiring, by the base station, first measurement request information sent by a neighboring base station, and sending the reference signal according to the first measurement request information; or receiving, by the base station, first DCI signaling, and sending the reference signal according to a trigger or an indication of the first DCI signaling; or
wherein a manner for determining a position at which the base station sends the reference signal comprises at least one of:
after acquiring the first measurement request information, determining, by the base station, the position of the reference signal to be a position at which the base station periodically sends the reference signal;
triggering, by the base station, the sending of the reference signal according to the first DCI signaling, and/or determining, by the base station, the position of the reference signal according to position information of sending the reference signal which is indicated by the first DCI signaling;
triggering, by the base station, the sending of the reference signal according to the first DCI signaling, and determining the position of the reference signal according to position information of the reference signal which is indicated by second DCI signaling; or
determining, by the base station, the position of the reference signal according to a timing relationship of n+k based on a position index n of the first DCI signaling, wherein k is a value of the timing relationship.

7. The method of claim 6, wherein the first DCI signaling carries the timing relationship k, wherein k is an integer greater than or equal to 0 or a set of integers greater than or equal to 0;
or
wherein the first DCI signaling or the second DCI signaling further carries at least one of:
a time domain symbol position or a symbol position set of the reference signal;
a frequency domain pattern index of the reference signal; or
an index of a correspondence between a symbol and a frequency domain pattern of the reference signal.

8. The method of claim 1, further comprising at least one of:
vacating, by the base station, a resource position of a reference signal of a neighboring base station and/or a terminal in the neighboring base station;
adjusting, by the base station, a transmitted beam or a received beam; or
adjusting, by the base station, power of the transmission.

9. The method of claim 1, wherein reference signals of neighboring devices have same configuration information or different configuration information, wherein the configuration information comprises at least one of: a sequence, a subcarrier spacing, a pattern, a resource position, a cyclic shift, or a symbol;
or
wherein in response to determining that the reference signals of the neighboring devices have the same configuration information, the neighboring devices perform multiplexing or orthogonalization by at least one of: based on a same cyclic shift set, using, by different devices, different cyclic shifts in the same cyclic shift set or cyclic shifts in different cyclic shift subsets of the same cyclic shift set; or based on a same sequence, using, by the different devices, different scrambling manners.

10. A method for applying reference signal configuration information, **characterized by**:
acquiring (S 102), by a terminal, the reference signal configuration information, wherein the reference signal configuration information comprises at least one of: reference signal configuration information of a local cell, reference signal configuration information of a neighboring cell, or reference signal configuration information of a terminal in the neighboring cell; and
performing (S 104), by the terminal, a reception, a transmission or a measurement according to the acquired reference signal configuration information;
wherein the terminal reports a measurement result and/or a corresponding measurement resource information to a serving base station and/or a neighboring base station.

11. The method of claim 10, wherein acquiring, by the terminal, the reference signal configuration information comprises at least one of:
acquiring, by the terminal, the reference signal configuration information of the neighboring cell from a neighboring base station;
acquiring, by the terminal, the reference signal configuration information of the terminal in the neighboring cell from a terminal in the neighboring base station; or
acquiring, by the terminal from a serving base station, at least one of: the reference signal configuration information of the local cell, the reference signal configuration information of the neighboring cell, or the reference signal configuration information of the terminal in the neighboring cell;
or
wherein the reference signal configuration information comprises at least one of: a type or a type set of a reference signal, resource information of the reference signal, a sequence, a subcarrier spacing, power, or a measurement request indication;
or
wherein the resource information of the reference signal comprises at least one of:
a starting position of a time domain resource, an interval between time domain resources or a period of time domain resources, a symbol position, a symbol position set, a time domain pattern, time domain time window information, a starting position of a frequency domain resource, a size of the frequency domain resource, an interval between frequency domain resources or a period of frequency domain resources, a frequency domain pattern, an index of a correspondence between a symbol and the frequency domain pattern, a port index, a beam index, or a basic time-frequency pattern or pattern index.

12. The method of claim 11, wherein the time domain time window information comprises at least one of:
a starting position of a time window, a length of the time window, a starting resource position of the reference signal within the time window, or an interval between reference signal resources within the time window.

13. The method of claim 10, wherein performing, by the terminal, the transmission according to the acquired reference signal configuration information comprises:
periodically sending, by the terminal, a reference signal according to the acquired reference signal configuration information; or
aperiodically sending, by the terminal, a reference signal according to the acquired reference signal configuration information;
wherein aperiodically sending, by the terminal, the reference signal according to the acquired reference signal configuration information comprises:
acquiring, by the terminal, second measurement request information sent by the terminal in the neighboring cell, and sending the reference signal according to the second measurement request information; or
acquiring, by the terminal, third DCI signaling, and sending the reference signal according to a trigger and/or an indication of the third DCI signaling;
or
wherein a manner for determining a position at which the terminal sends the reference signal comprises at least one of:
after acquiring the second measurement request information, determining, by the terminal, the position of the reference signal to be a position at which the terminal periodically sends the reference signal;
triggering, by the terminal, the sending of the reference signal according to the third DCI signaling, and/or determining, by the terminal, the position of the reference signal according to position information of sending the reference signal which is indicated by the third DCI signaling;
triggering, by the terminal, the sending of the reference signal according to the third DCI signaling, and determining the position of the reference signal according to position information of the reference signal which is indicated by fourth DCI signaling; or
determining, by the terminal, the position of the reference signal according to a timing relationship of n+k based on a position index n of the third DCI signaling, wherein k is a value of the timing relationship;
wherein the third DCI signaling carries the timing relationship k, wherein k is an integer greater than or equal to 0 or a set of integers greater than or equal to 0;
or
wherein the third DCI signaling or the fourth DCI signaling further carries at least one of: a time domain symbol position or a symbol position set of the reference signal; a frequency domain pattern index of the reference signal; or an index of a correspondence between a symbol and a frequency domain pattern of the reference signal.

14. The method of claim 10, further comprising at least one of:
receiving, by the terminal, an indication of a serving base station, and/or performing, according to the indication of the serving base station, at least one of:
vacating, by the terminal, a resource position of a reference signal of a neighboring base station and/or a terminal in the neighboring base station;
adjusting, by the terminal, a transmitted beam or a received beam; or
adjusting, by the terminal, power of the transmission.

15. An apparatus for applying reference signal configuration information, disposed in a terminal, **characterized by**:
a first acquisition module (40), which is configured to acquire the reference signal configuration information, wherein the reference signal configuration information comprises at least one of: reference signal configuration information of a local cell, reference signal configuration information of a neighboring cell, or reference signal configuration information of a terminal in the neighboring cell; and
a first application module (42), which is configured to perform a reception, a transmission or a measurement according to the acquired reference signal configuration information;
wherein the apparatus further reports a measurement result and/or a corresponding measurement resource information to a serving base station and/or a neighboring base station.

## Patentansprüche

1. Verfahren zum Anwenden von Referenzsignal-Konfigurationsinformationen, **gekennzeichnet durch**:
Erfassen (S101), durch eine Basisstation, der Referenzsignal-Konfigurationsinformationen, wobei die Referenzsignal-Konfigurationsinformationen mindestens eines von Folgenden umfassen: Referenzsignal-Konfigurationsinformationen einer lokalen Zelle, Referenzsignal-Konfigurationsinformationen einer benachbarten Zelle oder Referenzsignal-Konfigurationsinformationen eines Endgeräts in der benachbarten Zelle; und
Ausführen (S103), durch die Basisstation, einer Übertragung oder einer Messung gemäß den erfassten Referenzsignal-Konfigurationsinformationen;
wobei die Basisstation ein Messergebnis und/oder entsprechende Messressourceninformationen empfängt, die von dem Endgerät gemeldet werden, nachdem das Endgerät eine Messung basierend auf den empfangenen Referenzsignal-Konfigurationsinformationen ausgeführt hat.

2. Verfahren nach Anspruch 1, ferner umfassend: Senden, durch die Basisstation, der Referenzsignal-Konfigurationsinformationen der lokalen Zelle und/oder Referenzsignal-Konfigurationsinformationen eines Endgeräts in der lokalen Zelle an eine benachbarte Basisstation oder ein Endgerät in der benachbarten Basisstation.

3. Verfahren nach Anspruch 1, wobei die Referenzsignal-Konfigurationsinformationen mindestens eines von Folgenden umfassen: einen Typ oder einen Typensatz eines Referenzsignals, Ressourceninformationen des Referenzsignals, eine Sequenz, einen Unterträgerabstand, eine Leistung oder eine Messanforderungsangabe;
wobei der Typ oder der Typensatz des Referenzsignals mindestens eines von Folgenden umfasst: ein Nullleistung-Referenzsignal oder ein Nicht-Nullleistung-Referenzsignal; oder wobei die Ressourceninformation des Referenzsignals mindestens eines von Folgenden umfasst:
eine Startposition einer Zeitbereichsressource, ein Intervall zwischen Zeitbereichsressourcen oder eine Periode von Zeitbereichsressourcen, eine Symbolposition, ein Symbolpositionssatz, ein Zeitbereichsmuster, Zeitbereich-Zeitfensterinformationen, eine Startposition einer Frequenzbereichsressource, einer Größe der Frequenzbereichsressource, ein Intervall zwischen Frequenzbereichsressourcen oder eine Periode von Frequenzbereichsressourcen, ein Frequenzbereichsmuster, ein Index einer Entsprechung zwischen einem Symbol und dem Frequenzbereichsmuster, ein Portindex, ein Strahlindex oder einem grundlegenden Zeit-/Frequenzmuster oder Musterindex.

4. Verfahren nach Anspruch 3, wobei die Zeitbereich-Zeitfensterinformation mindestens eines von Folgenden umfasst: eine Startposition eines Zeitfensters, eine Länge des Zeitfensters, eine Startressourcenposition des Referenzsignals innerhalb des Zeitfensters oder ein Intervall zwischen Referenzsignalressourcen innerhalb des Zeitfensters;
wobei die Basisstation die Übertragung oder die Messung des Referenzsignals über mindestens eine der Referenzsignalressourcen innerhalb des Zeitfensters ausführt.

5. Verfahren nach einem der Ansprüche 1 bis 4, wobei die Basisstation die Referenzsignal-Konfigurationsinformationen durch mindestens eines von Folgenden erfasst:
Signalisieren einer Funkressourcensteuerung, RRC, einer hohen Schicht;
Signalisieren von Downlink-Steuerinformationen, DCI, einer physikalischen Schicht;
eine Vorabvereinbarung zwischen Vorrichtungen, oder eine Vorabdefinition.

6. Verfahren nach Anspruch 1, wobei ein Ausführen, durch die Basisstation, der Übertragung gemäß den erfassten Referenzsignal-Konfigurationsinformation Folgendes umfasst: periodisches Senden, durch die Basisstation, eines Referenzsignals gemäß den erfassten Referenzsignal-Konfigurationsinformationen; oder aperiodisches Senden, durch die Basisstation, eines Referenzsignals gemäß den erfassten Referenzsignal-Konfigurationsinformationen;
wobei ein aperiodisches Senden, durch die Basisstation, des Referenzsignals Folgendes umfasst: Erfassen, durch die Basisstation, von ersten Messanforderungsinformationen, die von einer benachbarten Basisstation gesendet werden, und Senden des Referenzsignals gemäß den ersten Messanforderungsinformationen; oder Empfangen, durch die Basisstation, einer ersten DCI-Signalisierung und Senden des Referenzsignals gemäß einem Auslöser oder einer Angabe der ersten DCI-Signalisierung; oder
wobei eine Art und Weise zum Bestimmen einer Position, an der die Basisstation das Referenzsignal sendet, mindestens eine von Folgenden umfasst:
nach Erfassen der ersten Messanforderungsinformation, Bestimmen, durch die Basisstation, der Position des Referenzsignals als eine Position, an der die Basisstation periodisch das Referenzsignal sendet;
Auslösen, durch die Basisstation, des Sendens des Referenzsignals durch die Basisstation gemäß der ersten DCI-Signalisierung und/oder Bestimmen, durch die Basisstation, der Position des Referenzsignals gemäß der Positionsinformationen des Sendens des Referenzsignals, die durch die erste DCI-Signalisierung angegeben werden;
Auslösen, durch die Basisstation, des Sendens des Referenzsignals gemäß der ersten DCI-Signalisierung und Bestimmen der Position des Referenzsignals gemäß den Positionsinformationen des Referenzsignals, die durch die zweite DCI-Signalisierung angegeben werden; oder
Bestimmen, durch die Basisstation, der Position des Referenzsignals gemäß einem Zeitverhältnis von n+k basierend auf einem Positionsindex n der ersten DCI-Signalisierung, wobei k ein Wert des Zeitverhältnisses ist.

7. Verfahren nach Anspruch 6, wobei die erste DCI-Signalisierung das Zeitverhältnis k trägt, wobei k eine ganze Zahl größer als oder gleich wie 0 oder ein Satz von ganzen Zahlen größer als oder gleich wie 0 ist; oder wobei die erste DCI-Signalisierung oder die zweite DCI-Signalisierung ferner mindestens eines von Folgenden trägt:
eine Zeitbereich-Symbolposition oder einen Symbolpositionssatz des Referenzsignals;
einen Frequenzbereich-Musterindex des Referenzsignals; oder
einen Index einer Entsprechung zwischen einem Symbol und einem Frequenzbereichsmuster des Referenzsignals.

8. Verfahren nach Anspruch 1, ferner umfassend mindestens eines von Folgenden:
Freimachen, durch die Basisstation, einer Ressourcenposition eines Referenzsignals einer benachbarten Basisstation und/oder eines Endgeräts in der benachbarten Basisstation;
Einstellen, durch die Basisstation, eines übertragenen Strahls oder eines empfangenen Strahls; oder
Einstellen, durch die Basisstation, einer Leistung der Übertragung.

9. Verfahren nach Anspruch 1, wobei Referenzsignale benachbarter Vorrichtungen dieselben Konfigurationsinformationen oder unterschiedliche Konfigurationsinformationen aufweisen, wobei die Konfigurationsinformationen mindestens eines von Folgenden umfassen: eine Sequenz, einen Unterträgerabstand, ein Muster, eine Ressourcenposition, eine zyklische Verschiebung oder ein Symbol;
oder
wobei als Reaktion auf ein Bestimmen, dass die Referenzsignale der benachbarten Vorrichtungen die gleichen Konfigurationsinformationen aufweisen, die benachbarten Vorrichtungen ein Multiplexing oder eine Orthogonalisierung durch mindestens eines von Folgendem ausführen: basierend auf einem gleichen zyklischen Verschiebungssatz, wobei durch verschiedene Vorrichtungen verschiedene zyklische Verschiebungen in dem gleichen zyklischen Verschiebungssatz oder zyklische Verschiebungen in verschiedenen zyklischen Verschiebungsuntergruppen des gleichen zyklischen Verschiebungssatzes verwendet werden; oder basierend auf einer gleichen Sequenz, wobei durch die verschiedenen Vorrichtungen verschiedene Verschlüsselungsarten verwendet werden.

10. Verfahren zum Anwenden von Referenzsignal-Konfigurationsinformationen, **gekennzeichnet durch**:
Erfassen (S102), durch ein Endgerät, der Referenzsignal-Konfigurationsinformationen, wobei die Referenzsignal-Konfigurationsinformationen mindestens eines von Folgenden umfassen: Referenzsignal-Konfigurationsinformationen einer lokalen Zelle, Referenzsignal-Konfigurationsinformationen einer benachbarten Zelle oder Referenzsignal-Konfigurationsinformationen eines Endgeräts in der benachbarten Zelle; und
Ausführen (S104), durch ein Endgerät, eines Empfangs, einer Übertragung oder einer Messung gemäß den erfassten Referenzsignal-Konfigurationsinformationen;
wobei das Endgerät ein Messresultat und/oder eine entsprechende Messressourceninformation an eine bedienende Basisstation und/oder eine benachbarte Basisstation meldet.

11. Verfahren nach Anspruch 10, wobei ein Erfassen, durch ein Endgerät, der Referenzsignal-Konfigurationsinformationen mindestens eines von Folgenden umfasst:
Erfassen, durch ein Endgerät, der Referenzsignal-Konfigurationsinformationen der benachbarten Zelle von einer benachbarten Basisstation;
Erfassen, durch das Endgerät, der Referenzsignal-Konfigurationsinformationen des Endgeräts in der benachbarten Zelle von einem Endgerät in der benachbarten Basisstation; oder
Erfassen, durch das Endgerät, von einer bedienenden Basisstation, von mindestens einem von: Referenzsignal-Konfigurationsinformationen der lokalen Zelle, der Referenzsignal-Konfigurationsinformationen der benachbarten Zelle oder der Referenzsignal-Konfigurationsinformationen des Endgeräts in der benachbarten Zelle;
oder
wobei die Referenzsignal-Konfigurationsinformationen mindestens eines von Folgenden umfassen: einen Typ oder
einen Typensatz eines Referenzsignals, Ressourceninformationen des Referenzsignals, eine Sequenz, einen Unterträgerabstand, eine Leistung oder eine Messanforderungsangabe;
oder
wobei die Ressourceninformationen des Referenzsignals mindestens eines von Folgenden umfassen:
eine Startposition einer Zeitbereichsressource, ein Intervall zwischen Zeitbereichsressourcen oder eine Periode von Zeitbereichsressourcen, eine Symbolposition, ein Symbolpositionssatz, ein Zeitbereichsmuster, Zeitbereich-Zeitfensterinformationen, eine Startposition einer Frequenzbereichsressource, einer Größe der Frequenzbereichsressource, ein Intervall zwischen Frequenzbereichsressourcen oder eine Periode von Frequenzbereichsressourcen, ein Frequenzbereichsmuster, ein Index einer Entsprechung zwischen einem Symbol und dem Frequenzbereichsmuster, ein Portindex, ein Strahlindex oder einem grundlegenden Zeit-/Frequenzmuster oder Musterindex.

12. Verfahren nach Anspruch 11, wobei die Zeitbereich-Zeitfensterinformation mindestens eines von Folgenden umfassen:
eine Startposition eines Zeitfensters, eine Länge des Zeitfensters, eine Startressourcenposition des Referenzsignals innerhalb des Zeitfensters oder ein Intervall zwischen Referenzsignalressourcen innerhalb des Zeitfensters.

13. Verfahren nach Anspruch 10, wobei ein Ausführen, durch das Endgerät, der Übertragung gemäß den erfassten Referenzsignal-Konfigurationsinformationen Folgendes umfasst:
periodisches Senden, durch das Endgerät, eines Referenzsignals gemäß den erfassten Referenzsignal-Konfigurationsinformationen; oder
aperiodisches Senden, durch das Endgerät, eines Referenzsignals gemäß den erfassten Referenzsignal-Konfigurationsinformationen;
wobei ein aperiodisches Senden, durch das Endgerät, des Referenzsignals gemäß den erfassten Referenzsignal-Konfigurationsinformation Folgendes umfasst:
Erfassen, durch das Endgerät, von zweiten Messanforderungsinformationen, die von dem Endgerät in der benachbarten Zelle gesendet werden und Senden des Referenzsignals gemäß den zweiten Messanforderungsinformationen; oder
Erfassen, durch das Endgerät, einer dritten DCI-Signalisierung und Senden des Referenzsignals gemäß einem Auslöser und/oder einer Angabe der dritten DCI-Signalisierung; oder
wobei eine Art und Weise zum Bestimmen einer Position, an der das Endgerät das Referenzsignal sendet, mindestens eine von Folgenden umfasst:
nach Erfassen der zweiten Messanforderungsinformationen, Bestimmen, durch das Endgerät, der Position des Referenzsignals als eine Position, an der das Endgerät periodisch das Referenzsignal sendet;
Auslösen, durch das Endgerät, des Sendens des Referenzsignals an die dritte DCI-Signalisierung und/oder Bestimmen, durch das Endgerät, der Position des Referenzsignals gemäß der Positionsinformationen des Sendens des Referenzsignals, die durch die dritte DCI-Signalisierung angegeben werden;
Auslösen, durch das Endgerät, des Sendens des Referenzsignals an die dritte DCI-Signalisierung und Bestimmen der Position des Referenzsignals gemäß den Positionsinformationen des Referenzsignals, die durch die vierte DCI-Signalisierung angegeben werden; oder
Bestimmen, durch das Endgerät, der Position des Referenzsignals gemäß einem Zeitverhältnis von n+k basierend auf einem Positionsindex n der dritten DCI-Signalisierung, wobei k ein Wert des Zeitverhältnisses ist;
wobei die dritte DCI-Signalisierung das Zeitverhältnis k trägt, wobei k eine ganze Zahl größer als oder gleich wie 0 oder ein Satz von ganzen Zahlen größer als oder gleich wie 0 ist;
oder
wobei die dritte DCI-Signalisierung oder die vierte DCI-Signalisierung ferner mindestens eines von Folgenden trägt: eine Zeitbereich-Symbolposition oder einen Symbolpositionssatz des Referenzsignals; einen Frequenzbereich-Musterindex des Referenzsignals; oder
einen Index einer Entsprechung zwischen einem Symbol und einem Frequenzbereichsmuster des Referenzsignals.

14. Verfahren nach Anspruch 10, ferner umfassend mindestens eines von Folgenden:
Empfangen, durch das Endgerät, einer Angabe einer bedienenden Basisstation und/oder Ausführen, gemäß der Angabe der bedienenden Basisstation, von mindestens einem von Folgenden:
Freimachen, durch das Endgerät, einer Ressourcenposition eines Referenzsignals einer benachbarten Basisstation und/oder eines Endgeräts in der benachbarten Basisstation;
Einstellen, durch das Endgerät, eines gesendeten oder empfangenen Strahls; oder
Einstellen, durch das Endgerät, der Leistung der Übertragung.

15. Vorrichtung zur Anwendung von Referenzsignal-Konfigurationsinformationen, die in einem Endgerät angeordnet ist, **gekennzeichnet durch**:
ein erstes Erfassungsmodul (40), das konfiguriert ist, um die Referenzsignal-Konfigurationsinformationen zu erfassen, wobei die Referenzsignal-Konfigurationsinformationen mindestens eines von Folgenden umfassen: Referenzsignal-Konfigurationsinformationen einer lokalen Zelle, Referenzsignal-Konfigurationsinformationen einer benachbarten Zelle oder Referenzsignal-Konfigurationsinformationen eines Endgeräts in der benachbarten Zelle; und
ein erstes Anwendungsmodul (42), das konfiguriert ist, um einen Empfang, eine Übertragung oder eine Messung gemäß den erfassten Referenzsignal-Konfigurationsinformationen auszuführen;
wobei die Vorrichtung ferner ein Messresultat und/oder eine entsprechende Messressourceninformation an eine bedienende Basisstation und/oder eine benachbarte Basisstation meldet.

## Revendications

1. Procédé pour appliquer des informations de configuration de signal de référence, **caractérisé par** :
l'acquisition (S101), par une station de base, des informations de configuration de signal de référence, dans lequel les informations de configuration de signal de référence comprennent au moins une parmi : des informations de configuration de signal de référence d'une cellule locale, des informations de configuration de signal de référence d'une cellule voisine, ou des informations de configuration de signal de référence d'un terminal dans la cellule voisine ; et
la réalisation (S103), par la station de base, d'une transmission ou d'une mesure selon les informations de configuration de signal de référence acquises ;
dans lequel la station de base reçoit un résultat de mesure et/ou une information de ressource de mesure correspondante signalée par le terminal après que le terminal a réalisé une mesure sur la base d'informations de configuration de signal de référence reçues.

2. Procédé selon la revendication 1, comprenant en outre :
l'envoi, par la station de base, des informations de configuration de signal de référence de la cellule locale et/ou des informations de configuration de signal de référence d'un terminal dans la cellule locale à une station de base voisine ou à un terminal dans la station de base voisine.

3. Procédé selon la revendication 1, dans lequel les informations de configuration de signal de référence comprennent au moins un parmi : un type ou un ensemble de types d'un signal de référence, des informations de ressource du signal de référence, une séquence, un espacement de sous-porteuse, une puissance ou une indication de demande de mesure ;
dans lequel le type ou l'ensemble de types du signal de référence comprend au moins un parmi : un signal de référence de puissance nulle ou un signal de référence de puissance non nulle ; ou dans lequel les informations de ressource du signal de référence comprennent au moins un parmi : une position de départ d'une ressource de domaine temporel, un intervalle entre des ressources de domaine temporel ou une période de ressources de domaine temporel, une position de symbole, un ensemble de positions de symbole, un modèle de domaine temporel, des informations de fenêtre temporelle de domaine temporel, une position de départ d'une ressource de domaine fréquentiel, une taille de la ressource de domaine fréquentiel, un intervalle entre des ressources de domaine fréquentiel ou une période de ressources de domaine fréquentiel, un modèle de domaine fréquentiel, un indice d'une correspondance entre un symbole et le modèle de domaine fréquentiel, un indice de port, un indice de faisceau ou un modèle temps-fréquence de base ou un indice de modèle.

4. Procédé selon la revendication 3, dans lequel les informations de fenêtre temporelle de domaine temporel comprennent au moins un parmi : une position de départ d'une fenêtre temporelle, une longueur de la fenêtre temporelle, une position de ressource de départ du signal de référence au sein de la fenêtre temporelle, ou un intervalle entre des ressources de signal de référence au sein de la fenêtre temporelle ;
dans lequel la station de base réalise la transmission ou la mesure du signal de référence sur au moins une des ressources de signal de référence au sein de la fenêtre temporelle.

5. Procédé selon l'une quelconque des revendications 1 à 4, dans lequel la station de base acquiert les informations de configuration de signal de référence par au moins un parmi :
une signalisation de commande de ressource radio de couche supérieure, RRC ;
une signalisation d'informations de commande de liaison descendante de couche physique, DCI ;
un accord préalable entre dispositifs, ou
une prédéfinition.

6. Procédé selon la revendication 1, dans lequel la réalisation, par la station de base, de la transmission selon les informations de configuration de signal de référence acquises comprend : l'envoi périodique, par la station de base, d'un signal de référence selon les informations de configuration de signal de référence acquises ; ou l'envoi apériodique, par la station de base, d'un signal de référence selon les informations de configuration de signal de référence acquises ;
dans lequel l'envoi apériodique, par la station de base, du signal de référence comprend : l'acquisition, par la station de base, des premières informations de demande de mesure envoyées par une station de base voisine, et l'envoi du signal de référence selon les premières informations de demande de mesure ; ou la réception, par la station de base, d'une première signalisation DCI, et l'envoi du signal de référence selon un déclencheur ou une indication de la première signalisation DCI ; ou dans lequel une manière de déterminer une position à laquelle la station de base envoie le signal de référence comprend au moins un parmi :
après acquisition des premières informations de demande de mesure, la détermination, par la station de base, de la position du signal de référence comme étant une position à laquelle la station de base envoie périodiquement le signal de référence ;
le déclenchement, par la station de base, de l'envoi du signal de référence selon la première signalisation DCI, et/ou la détermination, par la station de base, de la position du signal de référence selon les informations de position d'envoi du signal de référence qui est indiquée par la première signalisation DCI ;
le déclenchement, par la station de base, de l'envoi du signal de référence selon la première signalisation DCI, et/ou la détermination de la position du signal de référence selon les informations de position du signal de référence qui est indiquée par la deuxième signalisation DCI ; ou
la détermination, par la station de base, de la position du signal de référence selon une relation temporelle de n+k sur la base d'un indice de position n de la première signalisation DCI, où k est une valeur de la relation temporelle.

7. Procédé selon la revendication 6, dans lequel la première signalisation DCI porte la relation temporelle k, dans lequel k est un entier supérieur ou égal à 0 ou un ensemble d'entiers supérieur ou égal à 0 ; ou
dans lequel la première signalisation DCI ou la deuxième signalisation DCI porte en outre au moins un parmi :
une position de symbole de domaine temporel ou un ensemble de positions de symbole du signal de référence ;
un indice de modèle de domaine fréquentiel du signal de référence ; ou
un indice d'une correspondance entre un symbole et un modèle de domaine fréquentiel du signal de référence.

8. Procédé selon la revendication 1, comprenant en outre au moins un parmi :
la libération, par la station de base, d'une position de ressource d'un signal de référence d'une station de base voisine et/ou d'un terminal dans la station de base voisine ;
l'ajustement, par la station de base, d'un faisceau transmis ou d'un faisceau reçu ; ou
l'ajustement, par la station de base, de la puissance de la transmission.

9. Procédé selon la revendication 1, dans lequel les signaux de référence de dispositifs voisins présentent les mêmes informations de configuration ou des informations de configuration différentes, dans lequel les informations de configuration comprennent au moins un parmi : une séquence, un espacement de sous-porteuse, un modèle, une position de ressource, un décalage cyclique, ou un symbole ; ou
dans lequel en réponse à la détermination que les signaux de référence des dispositifs voisins présentent les mêmes informations de configuration, les dispositifs voisins réalisent un multiplexage ou une orthogonalisation par au moins un parmi : sur la base d'un même ensemble de décalages cycliques, l'utilisation, par différents dispositifs, de différents décalages cycliques dans le même ensemble de décalages cycliques ou des décalages cycliques dans différents sous-ensembles de décalages cycliques du même ensemble de décalages cycliques ; ou sur la base d'une même séquence, l'utilisation, par les différents dispositifs, de manières de brouillage différentes.

10. Procédé pour appliquer des informations de configuration de signal de référence, **caractérisé par** :
l'acquisition (S102), par un terminal, des informations de configuration de signal de référence, dans lequel les informations de configuration de signal de référence comprennent au moins une parmi : des informations de configuration de signal de référence d'une cellule locale, des informations de configuration de signal de référence d'une cellule voisine, ou des informations de configuration de signal de référence d'un terminal dans la cellule voisine ; et
la réalisation (S104), par le terminal, d'une réception, d'une transmission ou d'une mesure selon les informations de configuration de signal de référence acquises ;
dans lequel le terminal signale un résultat de mesure et/ou une information de ressource de mesure correspondante à une station de base de desserte et/ou une station de base voisine.

11. Procédé selon la revendication 10, dans lequel l'acquisition, par le terminal, des informations de configuration de signal de référence comprend au moins un parmi :
l'acquisition, par le terminal, des informations de configuration de signal de référence de la cellule voisine à partir d'une station de base voisine ;
l'acquisition, par le terminal, des informations de configuration de signal de référence du terminal dans la cellule voisine à partir d'un terminal dans la station de base voisine ; ou
l'acquisition, par le terminal à partir d'une station de base de desserte, d'au moins une parmi : les informations de configuration de signal de référence de la cellule locale, les informations de configuration de signal de référence de la cellule voisine, ou les informations de configuration de signal de référence du terminal dans la cellule voisine ; ou
dans lequel les informations de configuration de signal de référence comprennent au moins un parmi : un type ou un ensemble de types d'un signal de référence, des informations de ressource du signal de référence, une séquence, un espacement de sous-porteuse, une puissance ou une indication de demande de mesure ; ou
dans lequel les informations de ressource du signal de référence comprennent au moins un parmi :
une position de départ d'une ressource de domaine temporel, un intervalle entre des ressources de domaine temporel ou une période de ressources de domaine temporel, une position de symbole, un ensemble de positions de symbole, un modèle de domaine temporel, des informations de fenêtre temporelle de domaine temporel, une position de départ d'une ressource de domaine fréquentiel, une taille de la ressource de domaine fréquentiel, un intervalle entre des ressources de domaine fréquentiel ou une période de ressources de domaine fréquentiel, un modèle de domaine fréquentiel, un indice d'une correspondance entre un symbole et le modèle de domaine fréquentiel, un indice de port, un indice de faisceau ou un modèle temps-fréquence de base ou un indice de modèle.

12. Procédé selon la revendication 11, dans lequel les informations de fenêtre temporelle de domaine temporel comprennent au moins un parmi :
une position de départ d'une fenêtre temporelle, une longueur de la fenêtre temporelle, une position de ressource de départ du signal de référence au sein de la fenêtre temporelle, ou un intervalle entre des ressources de signal de référence au sein de la fenêtre temporelle ;

13. Procédé selon la revendication 10, dans lequel l'exécution, par le terminal, de la transmission selon les informations de configuration de signal de référence acquises comprend :
l'envoi périodique, par le terminal, d'un signal de référence selon les informations de configuration de signal de référence acquises ; ou
l'envoi apériodique, par le terminal, d'un signal de référence selon les informations de configuration de signal de référence acquises ;
dans lequel l'envoi apériodique, par le terminal, du signal de référence selon les informations de configuration de signal de référence acquises comprend :
l'acquisition, par le terminal, de secondes informations de demande de mesure envoyées par le terminal dans la cellule voisine, et l'envoi du signal de référence selon les secondes informations de demande de mesure ; ou
l'acquisition, par le terminal, d'une troisième signalisation DCI, et l'envoi du signal de référence selon un déclencheur et/ou une indication de la troisième signalisation DCI ; ou
dans lequel une manière de déterminer une position à laquelle le terminal envoie le signal de référence comprend au moins un parmi :
après acquisition des secondes informations de demande de mesure, la détermination, par le terminal, de la position du signal de référence comme étant une position à laquelle le terminal envoie périodiquement le signal de référence ;
le déclenchement, par le terminal, de l'envoi du signal de référence selon la troisième signalisation DCI, et/ou la détermination, par le terminal, de la position du signal de référence selon les informations de position d'envoi du signal de référence qui est indiquée par la troisième signalisation DCI ;
le déclenchement, par le terminal, de l'envoi du signal de référence selon la troisième signalisation DCI, et/ou la détermination de la position du signal de référence selon les informations de position du signal de référence qui est indiquée par la quatrième signalisation DCI ; ou
la détermination, par le terminal, de la position du signal de référence selon une relation temporelle de n+k sur la base d'un indice de position n de la troisième signalisation DCI, où k est une valeur de la relation temporelle ;
dans lequel la troisième signalisation DCI porte la relation temporelle k, dans lequel k est un entier supérieur ou égal à 0 ou un ensemble d'entiers supérieur ou égal à 0 ; ou
dans lequel la troisième signalisation DCI ou la quatrième signalisation DCI porte en outre au moins un parmi : une position de symbole de domaine temporel ou un ensemble de positions de symbole du signal de référence ; un indice de modèle de domaine fréquentiel du signal de référence ; ou un indice d'une correspondance entre un symbole et un modèle de domaine fréquentiel du signal de référence.

14. Procédé selon la revendication 10, comprenant en outre au moins un parmi :
la réception, par le terminal, d'une indication d'une station de base de desserte, et/ou la réalisation, selon l'indication de la station de base de desserte, d'au moins un parmi :
la libération, par le terminal, d'une position de ressource d'un signal de référence d'une station de base voisine et/ou d'un terminal dans la station de base voisine ;
l'ajustement, par le terminal, d'un faisceau transmis ou d'un faisceau reçu ; ou
l'ajustement, par le terminal, de la puissance de la transmission.

15. Appareil pour appliquer des informations de configuration de signal de référence, disposé dans un terminal, **caractérisé par** :
un premier module d'acquisition (40), qui est configuré pour acquérir le signal de référence, dans lequel les informations de configuration de signal de référence comprennent au moins une parmi : des informations de configuration de signal de référence d'une cellule locale, des informations de configuration de signal de référence d'une cellule voisine, ou des informations de configuration de signal de référence d'un terminal dans la cellule voisine ; et
un premier module d'application (42), qui est configuré pour réaliser une réception, une transmission ou une mesure selon les informations de configuration de signal de référence acquises ;
dans lequel l'appareil signale en outre un résultat de mesure et/ou une information de ressource de mesure correspondante à une station de base de desserte et/ou une station de base voisine.
